**Europäisches Patentamt**

**European Patent Office**

**Office européen des brevets**

(11) Numéro de publication : **0 469 145 B1**

(12) **FASCICULE DE BREVET EUROPEEN**

(45) Date de publication du fascicule du brevet :
**14.06.95 Bulletin 95/24**

(51) Int. Cl.$^6$ : **F16H 61/02,** F16H 3/66, F16H 47/08

(21) Numéro de dépôt : **91906354.5**

(22) Date de dépôt : **27.02.91**

(86) Numéro de dépôt international :
**PCT/FR91/00159**

(87) Numéro de publication internationale :
**WO 91/13275 05.09.91 Gazette 91/21**

(54) **DISPOSITIF DE TRANSMISSION A RAPPORT VARIABLE, EN PARTICULIER POUR L'AUTOMOBILE.**

(30) Priorité : **28.02.90 FR 9002480**
**23.05.90 FR 9006438**

(43) Date de publication de la demande :
**05.02.92 Bulletin 92/06**

(45) Mention de la délivrance du brevet :
**14.06.95 Bulletin 95/24**

(84) Etats contractants désignés :
**AT BE CH DE DK ES FR GB GR IT LI LU NL SE**

(56) Documents cités :
**FR-A- 686 463**
**US-A- 3 426 618**
**US-A- 4 111 291**

(73) Titulaire : **ANTONOV AUTOMOTIVE EUROPE B.V.**
**Weena 373**
**NL-3013 AL Rotterdam (NL)**

(72) Inventeur : **Antonov, Roumen, Antonov**
**25, rue d'Artois**
**F-75008 Paris (FR)**

(74) Mandataire : **Pontet, Bernard et al**
**Pontet & Allano s.a.r.l.**
**25, rue Jean Rostand**
**Parc-Club Orsay-Université**
**F-91893 Orsay Cédex (FR)**

## Description

La présente invention concerne un dispositif de transmission à rapport variable, en particulier pour l'automobile.

On connaît les dispositifs dits "transmission automatique" qui comprennent un moyen de transfert d'énergie à glissement angulaire relatif monté en série avec un mécanisme différentiel à trois accès.

Le moyen de transfert d'énergie est en général constitué par un convertisseur hydraulique de couple. Il comprend comme organe menant un générateur d'énergie hydraulique, appelé pompe, qui est relié à l'entrée du dispositif de transmission, et comme organe mené un moteur hydraulique, appelé turbine, qui produit de l'énergie mécanique à partir de l'énergie hydraulique fournie par la pompe, et qui est relié à l'un des accès du mécanisme différentiel.

Le mécanisme différentiel est en général constitué par un train planétaire dont un accès autre que celui relié à la turbine est relié à la sortie du dispositif de transmission. Le troisième accès du train planétaire peut être soit immobilisé, pour faire fonctionner le train planétaire en réducteur, soit lié à l'un des deux autres accès pour faire fonctionner le train planétaire en prise directe.

Le convertisseur de couple a l'avantage de remplacer l'embrayage à friction, et d'assurer par lui-même, en fonction de son rapport de vitesse turbine/pompe, une certaine multiplication variable du couple, qui permet de réaliser la transmission avec un nombre réduit de rapports mécaniques distincts, par exemple seulement deux rapports avec un seul train planétaire comme il a été dit plus haut.

Par contre, les transmissions automatiques classiques présentent plusieurs graves inconvénients. Leur rendement est très mauvais, notamment dans la circulation urbaine. De plus, leur poids est très important, leur coût et élevé, et elles sont d'une grande complexité notamment lorsqu'elles offrent de nombreux rapports de transmission comme le veut la tendance actuelle.

Certes, les transmissions les plus récentes comprennent un dispositif de prise directe qui se met en service lorsque le véhicule atteint une vitesse de croisière pour supprimer à ce stade les pertes dans le convertisseur. Toutefois, ce dispositif, qui ajoute encore à la complexité, ne résout pas le problème des pertes très importantes occasionnées par le convertisseur à faible vitesse, et en particulier en phase d'accélération.

On connaît en outre des dispositifs dont l'entrée entraîne directement l'un des accès du mécanisme différentiel et entraîne par l'intermédiaire d'un moyen d'accouplement variable un autre accès du mécanisme différentiel, le troisième accès étant relié à la sortie.

Ainsi, seule une partie de la puissance passe par le moyen d'accouplement variable. Selon le US-A-3 426 618 le moyen d'accouplement variable est un convertisseur de couple dont la sortie est reliée au deuxième accès du mécanisme différentiel par l'intermédiaire d'un réducteur mécanique. Le convertisseur peut alors être de relativement petite taille et occasionner des pertes réduites.

On aboutit cependant à un dispositif relativement complexe comportant, dans l'un des exemples donnés, deux trains épicycloïdaux pour réaliser seulement deux rapports de transmission. De plus la commande de passage d'un rapport à l'autre est complexe avec commande simultanée d'un embrayage et d'un frein en fonction de paramètres, tels que la vitesse de rotation et/ou le couple à transmettre, qui doivent nécessairement être fournis par des dispositifs de mesure ou de détection. Ce système peut provoquer des à-coups ou au contraire des ruptures passagères de transmission.

Selon le FR-A- 686 463, le moyen d'accouplement variable est un embrayage centrifuge qui ou bien accouple le deuxième accès à l'entrée pour réaliser une prise directe ou bien libère complètement le deuxième accès pour que le mécanisme différentiel fonctionne en réducteur, le deuxième accès étant alors retenu par une roue libre. On n'a donc toujours que deux états de fonctionnement.

Le but de l'invention est ainsi de proposer un dispositif de transmission à rapport variable qui soit du genre qui vient d'être discuté, mais qui tout en étant très simple et économique offre au moins un état de fonctionnement supplémentaire.

L'invention vise ainsi, selon le FR-A-686 463, un dispositif de transmission à rapport variable, en particulier pour l'automobile, comprenant, entre une entrée et une sortie du dispositif, un mécanisme différentiel à trois accès dont, au moins pendant certaines phases du fonctionnement :

- un premier accès du mécanisme différentiel est relié à la sortie du dispositif ;
- un deuxième accès du mécanisme différentiel est relié à un organe mené d'un premier moyen d'accouplement sélectif pour le passage d'un premier rapport de transmission à un deuxième rapport de transmission dans lequel la vitesse de rotation de la sortie est plus grande, par rapport à celle de l'entrée, que lors du fonctionnement selon le premier rapport, un organe menant du moyen d'accouplement sélectif étant relié à l'entrée du dispositif ;
- un troisième accès du mécanisme différentiel est relié à l'entrée du dispositif indépendamment du premier moyen d'accouplement

des moyens étant prévus pour empêcher la rotation du deuxième accès en sens rétrograde lorsque pour le fonctionnement selon le premier rapport de transmission, le premier moyen d'accouplement sélectif libère le deuxième accès relativement à l'entrée, le premier moyen d'accouplement sélectif étant d'un type activé en fonction d'une vitesse de rotation de ce moyen d'accouplement et autorisant un glissement angulaire relatif avec transmission d'un couple qui est fonction de cette vitesse de rotation, de manière que le passage au deuxième rapport se décale automatiquement vers les vitesses plus élevées lorsque le couple à transmettre est plus élevé.

Suivant l'invention, le dispositif est caractérisé en ce qu'à l'état accouplé, le premier moyen d'accouplement sélectif active, pour le deuxième rapport de transmission, une liaison avec réduction de vitesse entre l'entrée du dispositif et le deuxième accès du mécanisme différentiel, et en ce qu'il est prévu un second moyen d'accouplement sélectif sensible à une vitesse de rotation pour réaliser un autre rapport de transmission correspondant à des conditions de prise directe entre le premier et le troisième accès du mécanisme différentiel.

En fonctionnement selon le premier rapport, le premier moyen d'accouplement sélectif est à l'état sensiblement désaccouplé, de sorte qu'au moins la quasi-totalité de la puissance est envoyée au troisième accès, donc sans passer par le moyen d'accouplement sélectif, car la vitesse de rotation du moyen d'accouplement ne lui permet pas encore de transférer au deuxième accès le couple de réaction à appliquer au deuxième accès pour que le mécanisme différentiel fonctionne en réducteur entre son troisième accès relié directement à l'entrée du dispositif et son premier accès relié à la sortie de celui-ci. Ce couple de réaction est fourni par les moyens empêchant le deuxième accès de tourner en sens rétrograde, par exemple un frein ou de préférence une roue libre. Le premier rapport est donc assuré par transmission mécanique entre le troisième accès et le premier accès, sans intervention hydraulique, même dans le cas où le moyen d'accouplement sélectif est un convertisseur de couple.

La vitesse de rotation de l'organe menant du premier moyen d'accouplement sélectif augmentant, celui-ci transfère à partir d'un certain stade un couple excédant le couple de réaction strictement nécessaire sur le deuxième accès. Dès lors, le deuxième accès se met en rotation dans le sens contribuant à accroître la vitesse de la sortie du dispositif. Le mécanisme différentiel fonctionne ainsi en additionneur de puissance, c'est à dire que le premier accès, relié à la sortie du dispositif, reçoit la somme des puissances transmises respectivement au deuxième accès via le moyen d'accouplement sélectif et au troisième accès directement depuis l'entrée.

Dans cette deuxième phase de fonctionnement, le rapport de transmission, entre l'entrée et la sortie de la transmission, varie en fonction du glissement dans le moyen d'accouplement sélectif. Si le couple appliqué à la sortie du dispositif de transmission est résistant, et surtout s'il est élevé, le moyen d'accouplement sélectif peut lui-même, au moins s'il est du type convertisseur de couple, permettre un glissement qui réduit le rapport des vitesses sortie/entrée de la transmission, et augmente ainsi le couple à la sortie du dispositif. Ceci correspond à ce que l'on attend d'une transmission pour l'automobile, à savoir une vitesse de rotation du moteur relativement élevée lorsque le couple à fournir aux roues est important.

Pour que la liaison assurée entre l'entrée et le deuxième accès du mécanisme différentiel soit une liaison avec réduction de vitesse on peut aussi avoir recours à un premier moyen d'accouplement capable d'assurer une liaison rigide, à condition que la liaison activée par le premier moyen d'accouplement entre l'entrée et le deuxième accès comporte un réducteur de vitesse.

Une troisième phase de fonctionnement est réalisée lorsque le deuxième moyen d'accouplement sélectif accouple deux des accès du mécanisme différentiel et réalise ainsi une prise directe.

Le premier moyen d'accouplement sélectif peut être un convertisseur de couple. Cet appareil a l'avantage de multiplier le couple lorsqu'il fonctionne avec un glissement. Il a par contre l'inconvénient d'être relativement cher, encombrant, et de consommer en permanence de l'énergie.

De préférence, le moyen d'accouplement sélectif est un embrayage commandé en fonction de ladite vitesse de rotation pour passer d'un état débrayé à un état embrayé lorsque ladite vitesse de rotation du moyen d'accouplement franchit dans le sens croissant une gamme de vitesse prédéterminée.

Il a en effet été trouvé selon la présente invention qu'un simple embrayage commandé avec une progressivité convenable pouvait remplacer le convertisseur de couple avec les avantages suivants :
- faible coût ;
- faible encombrement ;
- absence de pertes lorsqu'il est complètement accouplé ou complètement désaccouplé ;
- pertes acceptables et finalement beaucoup plus réduites qu'on ne pourrait le penser a priori lorsque l'embrayage patine sous charge, surtout si une partie seulement de la puissance passe par cet embrayage, du moins au moment du patinage.

Pour faire varier la gamme de vitesse de l'embrayage comme une fonction croissante du couple transmis par le dispositif, on peut avantageusement faire en sorte que l'effort de serrage appliqué à l'embrayage soit fonction croissante de la vitesse. Ainsi, pour un couple à transmettre plus important, nécessitant une force de serrage plus importante pour réaliser l'embrayage, la vitesse à laquelle la prise d'embrayage est réalisée est plus élevée.

La présente invention vise également un mode de réalisation avantageux d'un embrayage progressif sensible à la vitesse de rotation et au couple à transmettre.

La présente invention vise encore l'adjonction, fonctionnellement en série dans le dispositif de transmission, d'un différentiel supplémentaire à deux vitesses à changement automatique, avec possibilité de sélection manuelle d'un rapport de marche arrière.

D'autres particularités et avantages de l'invention ressortiront encore de la description ci-après de divers exemples non limitatifs.

Aux dessins annexés :
- la figure 1 est une vue schématique en coupe axiale d'un premier mode de réalisation du dispositif de transmission selon l'invention ;
- la figure 2 est un graphique comparatif de rendements en fonction de la vitesse d'un véhicule ;
- les figures 3 à 5 sont des vues en coupe axiale d'un deuxième, d'un troisième et d'un quatrième mode de réalisation du dispositif de transmission selon l'invention ;
- la figure 6 est une vue partielle en coupe axiale agrandie d'un embrayage centrifuge de la figure 5, à l'état débrayé ;
- la figure 7 est une vue analogue à la figure 6, lorsque l'embrayage est à l'état embrayé ;
- la figure 8 est une vue partielle montrant une masselotte basculée en position limite ;
- la figure 9 est une vue en perspective partielle éclatée de l'embrayage des figures 6 à 8 ; et
- la figure 10 est une vue schématique d'une variante de l'embrayage.

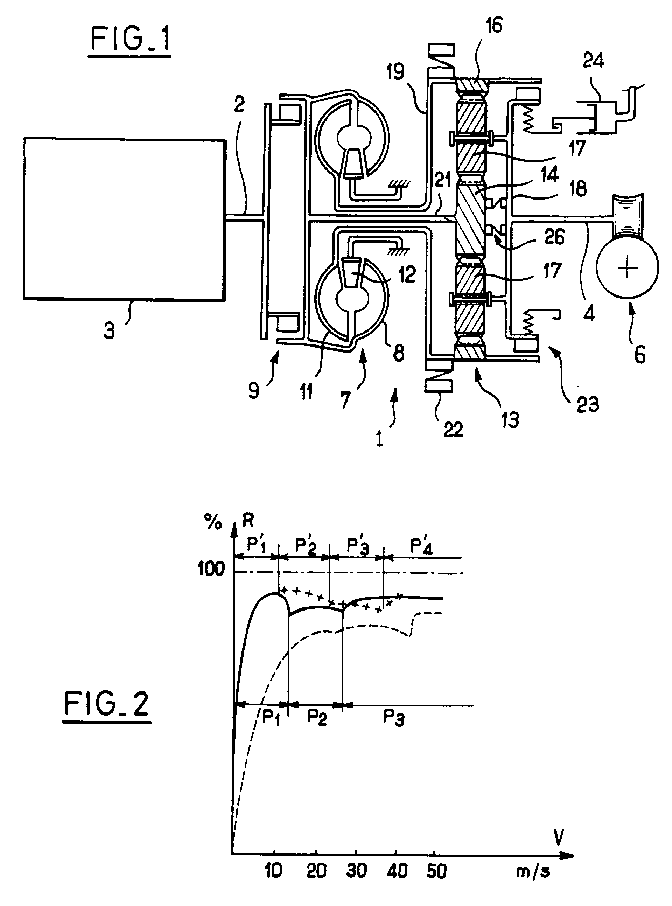

Dans l'exemple représenté à la figure 1, le dispositif de transmission 1 selon l'invention a un arbre d'entrée 2 relié à la sortie d'un moteur thermique 3 qui peut être le moteur d'entraînement d'une automobile, et une sortie 4 qui est reliée à l'entrée d'un essieu-moteur 6.

Le dispositif de transmission 1 comprend un moyen d'accouplement sélectif à glissement angulaire relatif 7 réalisé sous la forme d'un convertisseur hydraulique de couple. Le convertisseur 7 comprend un organe menant qui est un générateur d'énergie hydraulique ou "pompe" 8 relié à l'entrée 2 par l'intermédiaire d'un embrayage centrifuge 9. Celui-ci est sensible à la vitesse de rotation de l'entrée 2 pour accoupler l'entrée 2 avec la pompe 8 lorsque la vitesse de rotation de l'entrée 2 dépasse par exemple 1 200 tours/minute (125 rad/s), c'est-à-dire dépasse légèrement le régime de ralenti du moteur 3.

Le convertisseur de couple 7 comprend en outre, de manière classique, un organe mené qui est un moteur hydraulique ou "turbine" 11, ainsi qu'un "réacteur" 12 qui est immobilisé en rotation relativement au bâti de manière appropriée pour offrir à l'huile, en service, un appui de réaction permettant la conversion du couple.

Comme l'on sait, un convertisseur de couple est un appareil qui, pour un couple donné appliqué à sa pompe 8, produit par sa turbine 11 un couple qui est orienté dans le même sens et multiplié par un facteur qui est une fonction croissante du glissement angulaire relatif de la turbine 11 par rapport à la pompe 8.

Le dispositif de transmission 1 comprend en outre un mécanisme différentiel 13 réalisé sous la forme d'un train planétaire comprenant une roue planétaire 14, une couronne 16, et des satellites 17 qui engrènent avec la roue planétaire 14 et avec la couronne 16.

Les satellites 17 sont montés en rotation sur un porte-satellites 18 qui constitue un premier des trois accès du mécanisme différentiel 13, et ce premier accès est relié directement en rotation à la sortie 4 du dispositif de transmission.

Un deuxième accès 19 du mécanisme différentiel 13 est solidaire en rotation de la couronne 16 et il est également rendu solidaire en rotation de la turbine 11 du convertisseur de couple 7.

Un troisième accès 21 du mécanisme différentiel 13 est solidaire en rotation de la roue planétaire 14 et il est également rendu solidaire en rotation de la pompe 8 du convertisseur 7.

Par "mécanisme différentiel" on entend un mécanisme à trois accès dont chacun a une vitesse angulaire qui est fonction de la vitesse angulaire des deux autres, cette fonction étant déterminée par les rapports d'engrenage reliant entre eux les trois accès dans le mécanisme.

Le dispositif de transmission 1 comprend en outre une roue libre 22 qui permet au deuxième accès 19, c'est-à-dire à la couronne 16, de tourner dans le sens avant, c'est-à-dire le sens tendant à entraîner la sortie 4 du dispositif de transmission dans le sens correspondant au fonctionnement du véhicule en marche avant. Dans l'exemple décrit, l'entrée 2 et la sortie 4 tournent dans le même sens, qui constitue le sens avant pour tous les éléments du dispositif 1 susceptibles de tourner autour de l'axe central de la transmission. La roue libre 22 empêche la rotation de la couronne 16 en sens rétrograde par rapport au bâti de la transmission.

Un embrayage 23 est monté pour accoupler sélectivement le premier accès 18 et le deuxième accès 19 du mécanisme différentiel 13 de manière à réaliser une prise directe entre l'entrée 2 et la sortie 4 du dispositif.

L'embrayage 23 est sensible à la vitesse de rotation de la sortie 4 du dispositif pour accoupler les premier et deuxième accès 18 et 19 l'un avec l'autre au-delà d'un certain seuil de vitesse de rotation de la sortie 4, et il est également sensible à la dépression régnant dans le collecteur d'admission (non représenté) du moteur 3 pour élever le seuil de vitesse de rotation précité lorsque la dépression régnant dans le collecteur est faible, ce qui signifie que le couple demandé au groupe moto-propulseur constitué par le moteur 3 et le dispositif de transmission 1 est élevé. On a schématisé cette influence de la dépression par un système à cylindre et piston 24.

Une deuxième roue libre 26 est interposée entre le premier accès 18 et le troisième accès 21 pour interdire au premier accès 18 relié à la sortie 4, de tourner à vitesse plus élevée que le troisième accès 21 relié à l'entrée 2 du dispositif. Ainsi, quand la sortie 4 tend à tourner plus vite que l'entrée 2, par exemple en descente, elle entraîne le moteur 3 à vitesse plus élevée, ce qui permet le fonctionnement en "frein-moteur".

Le fonctionnement du dispositif de transmission 1 est le suivant :

Lorsque le moteur 3 tourne au ralenti, l'embrayage centrifuge 9 est désaccouplé, de sorte que l'ensemble du dispositif de transmission 1 exceptée l'entrée 2 est immobile si les roues du véhicule sont immobiles.

Si l'on fait augmenter la vitesse de rotation de l'entrée 2, en agissant sur le moteur 3, l'embrayage centrifuge 9 réalise l'accouplement entre l'entrée 2 et d'une part la pompe 8 du convertisseur 7 et d'autre part le troisième accès 21, c'est-à-dire la roue planétaire 14 du train planétaire 13. Compte tenu de la résistance à la rotation de la sortie 4, la rotation de la roue planétaire 14 tend à faire tourner la couronne 16 en sens inverse, ce à quoi s'oppose la roue libre 22, de sorte que le porte-satellites 18 et par conséquent la sortie 4 sont entraînés dans le même sens que la roue planétaire 14, mais à une vitesse démultipliée dans un rapport qui peut être par exemple de 4 selon les rapports de denture choisis pour le train planétaire 13.

En même temps, la pompe 8 du convertisseur 7 transmet un couple à la turbine 11 dans le sens avant, et ce couple est transmis à l'accès 19 du train planétaire 13. Au début, ce couple est inférieur au couple transmis en sens inverse à la couronne 16 par les satellites 17 en raison d'une part d'une certaine inertie de l'huile contenue dans le convertisseur 7, et d'autre part d'une vitesse de rotation insuffisante de la pompe 8. C'est la raison pour laquelle la couronne 16 tend à tourner en sens rétrograde et prend ainsi un appui de réaction sur le bâti par l'intermédiaire de la roue libre 22 qui empêche ce mouvement. La transmission fonctionne alors selon un premier rapport de transmission qui est purement mécanique.

Dès que le convertisseur 7 produit un couple suffisant sur la turbine 11, la couronne 16 se met en rotation en sens avant et transmet ainsi au porte-satellites 18 une puissance utile qui s'ajoute à celle transmise par l'intermédiaire de la roue planétaire 14. A ce stade, le mécanisme différentiel fonctionne en additionneur de puissance.

Le couple transmis par le convertisseur 7 sur la turbine 11 augmentant, la couronne 16 prend une vitesse angulaire croissante qui se rapproche de la vitesse angulaire de la roue planétaire 14, au glissement du convertisseur près. Le rapport de transmission initial du dispositif 1 passe donc progressivement d'une valeur qui est par exemple de 4 à 1 à une valeur qui est voisine de 1 à 1, valeur qui constitue un deuxième rapport de la transmission.

Ainsi, le convertisseur de couple à réalisé dans le mécanisme différentiel 13 un accouplement progressif qui a fait passer la transmission d'un premier à un deuxième rapport, par variation continue. Cet accouplement a été réalisé en fonction de la vitesse de rotation de la pompe 8, vitesse qui détermine le couple transmis à la turbine 11 à l'arrêt, et par le couple de réaction sur la couronne, qui est proportionnel au couple résistant sur la sortie 4 de la transmission. Par conséquent, si le couple résistant sur la sortie 4 est élevé, la gamme des vitesses de rotation de la pompe 8 au cours desquelles le convertisseur effectue la transition entre le premier et le deuxième rapport se décale vers le haut, comme on le souhaite dans bien des cas, notamment pour l'automobile.

Quand la vitesse angulaire de la sortie 4 dépasse le seuil déterminé par l'embrayage 23 de la manière exposée plus haut, l'embrayage 23 accouple le porte-satellites 18 avec la couronne 16 de sorte que l'ensemble du dispositif de transmission 1, excepté le réacteur 12 du convertisseur 7, tourne à la vitesse de l'entrée 2, qui est donc celle également de la sortie 4.

On a représenté en traits pleins, à la figure 2, un exemple de la courbe du rendement R de la transmission de la figure 1 en fonction de la vitesse V du véhicule. On Y distingue trois phases de fonctionnement, à savoir une phase $P_1$ au cours de laquelle la couronne 16 est immobile, une phase $P_2$ au cours de laquelle la couronne 16 est en mouvement et une partie de la puissance est transmise à travers le convertisseur 7 et une phase $P_3$ correspondant à la prise directe grâce à l'embrayage 23. Le rendement est moins bon au cours de la phase $P_2$ car il est affecté par le rendement du convertisseur qui transmet une partie de la puissance motrice. Mais il est remarquable de constater que dans toutes les plages le rendement est nettement supérieur à celui d'une transmission automatique classique, qui est figuré en pointillés à la figure 2.

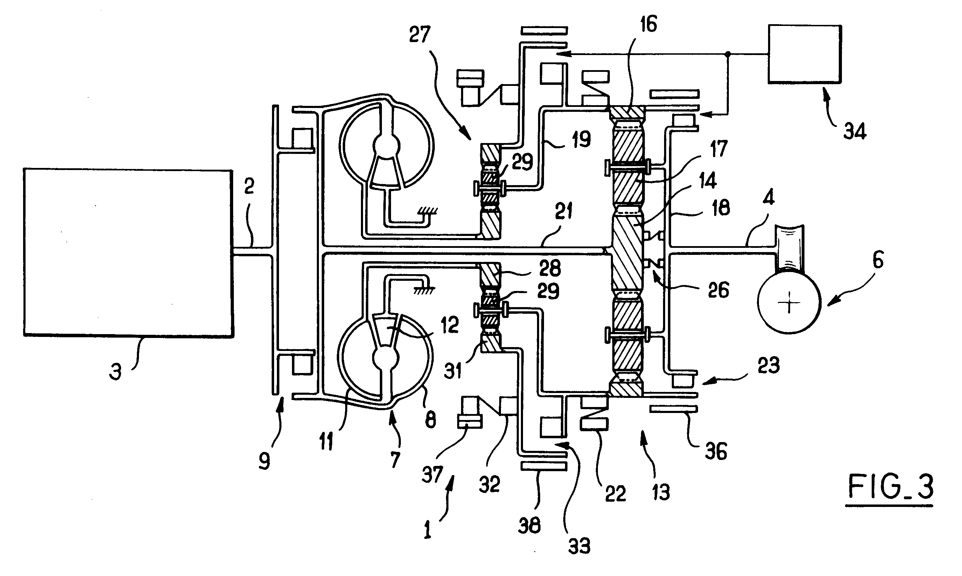

On ne décrira l'exemple de la figure 3 qu'en ce qui concerne ses différences par rapport à la figure 1.

La turbine 11 du convertisseur 7 est reliée au deuxième accès 19 du train planétaire 13 non plus directement mais par l'intermédiaire d'un réducteur planétaire 27. Plus particulièrement, la turbine 11 est reliée à la roue planétaire 28 du réducteur 27, et le deuxième accès 19 du mécanisme différentiel 13 constitue le porte-satellites du réducteur planétaire 27, et porte à ce titre des satellites 29 qui engrènent d'une part avec la roue planétaire 28 et d'autre part avec une couronne 31 du réducteur planétaire 27. La couronne 31 est associée à une roue libre 32 ne lui permettant de tourner que dans le sens avant. D'autre part, un embrayage 33 permet de relier sélectivement le deuxième accès 19 du mécanisme différentiel 13 avec la couronne 31 du réducteur planétaire 27.

Lorsque l'embrayage 33 est désaccouplé, le réducteur planétaire 27 réduit la vitesse de rotation du deuxième accès 19 par rapport à la vitesse de rotation de la turbine 11, car la couronne 31, qui tend à tourner en sens rétrograde, en est empêchée par la roue libre 32 et se trouve donc immobilisée. Le rapport de réduction peut être, par exemple, de 2,5 à 1.

Au contraire, lorsque l'embrayage 33 est en prise, le réducteur planétaire 27 se comporte en prise directe de sorte que la couronne 16 tourne à la même vitesse que la turbine 11 comme dans l'exemple précédent.

Un boîtier de pilotage 34 agit sur un organe de réglage des embrayages centrifuges 23 et 33 pour modifier leur seuil de vitesse respectif en fonction de paramètres tels que la position de la pédale d'accélérateur du moteur 3, la dépression dans la tubulure d'admission du moteur 3, et/ou, pour ce qui concerne l'embrayage 33, la vitesse de rotation de la sortie 4. En tout état de cause, le seuil de vitesse de l'embrayage centrifuge 33 est inférieur à celui de l'embrayage centrifuge 23.

Il est de plus prévu un moyen 36 de blocage sélectif de la couronne 16, un moyen 38 de blocage sélectif de la couronne 31, qui sont normalement à l'état débloqué, et un moyen de blocage sélectif 37 du support de la roue libre 32, qui est normalement à l'état bloqué.

Le fonctionnement du dispositif de transmission de la figure 3 est le suivant. Dans la suite, on considérera que les moyens de blocage 36 et 38 sont à l'état débloqué et le moyen de blocage 37 à l'état bloqué jusqu'à ce qu'on aborde la question du fonctionnement en frein-moteur.

Lors du démarrage, une fois que l'embrayage centrifuge 9 est passé à l'état embrayé, et alors que les embrayages centrifuges 23 et 33 sont à l'état débrayé, la première phase de fonctionnement $P'_1$ est sensiblement identique à la phase $P_1$ de la réalisation de la figure 1. Toutefois, le convertisseur de couple 7 agit sur la couronne 16 par l'intermédiaire du réducteur 27, de sorte qu'il parvient plus rapidement à fournir à la couronne 16 un couple excédant le couple de réaction strictement nécessaire pour équilibrer l'action de la roue planétaire 14. La phase de fonctionnement $P'_1$ est donc plus brève que la phase de fonctionnement $P_1$ (voir figure 2).

Ensuite, comme le montre la figure 2 par la courbe en petites croix, qui est relative à la réalisation de la figure 3, la courbe de rendement s'éloigne de celle de la réalisation de la figure 1.

La phase $P'_2$ suivante débute lorsque la couronne 16 commence à être entraînée dans le sens avant par le convertisseur 7 via le réducteur 27. Grâce au réducteur, la couronne 16 n'est entraînée qu'à une vitesse très inférieure à celle de la roue planétaire 14, par exemple 2,5 fois inférieure (si le rapport du réducteur 27 est égal à 2,5) à la fin de la phase $P'_2$ lorsque le convertisseur 7 ne fonctionne plus que sous un glissement minimal. Si l'on reprend l'exemple précédent dans lequel le rapport de réduction entre l'entrée 2 et la sortie 4 est égal à 4 lorsque la couronne 16 est bloquée, ce rapport global devient égal à 1,8 si la couronne 16 est entraînée à une vitesse 2,5 fois inférieure à celle de la roue planétaire 14. La phase $P'_2$ va donc faire passer la transmission d'un premier rapport dont la valeur est 4 à un deuxième rapport dont la valeur est légèrement supérieure à 1,8 (compte tenu du glissement du convertisseur 7 qui ne s'annule jamais). Dans cette phase, la puissance transmise par le convertisseur est plus faible que pendant la phase $P_2$, grâce au réducteur, ce qui améliore sensiblement le rendement et en même temps augmente le rapport global de réduction, et par conséquent augmente le couple fourni à l'essieu-moteur 6.

Ensuite, commence une phase $P'_3$ lorsque le seuil de vitesse de l'embrayage centrifuge 33 est atteint, seuil à partir duquel le réducteur 27 se comporte en prise directe, de sorte que le dispositif de transmission va se mettre progressivement à fonctionner sous un troisième rapport de transmission, voisin de la valeur 1, comme pendant la phase $P_2$ dans la réalisation de la figure 1. Toutefois, dans la réalisation de la figure 3, on a admis que la phase $P'_3$ se prolongeait au-delà de la phase $P_2$, compte tenu de l'étagement en quatre phases au lieu de trois. Ceci peut être obtenu en utilisant par exemple un convertisseur 7 transmettant moins de couple à vitesse et glissement donnés.

A l'issue de la phase $P'_3$, le seuil de vitesse de l'embrayage centrifuge 23 est atteint, il s'établit une situation de prise directe dans l'ensemble de la transmission, l'embrayage 33 restant lui-même en prise.

En fonctionnement en frein-moteur, la roue libre 26 entre l'entrée 2 et la sortie 4 empêche en tout état de cause la sortie 4 de tourner plus vite que l'entrée 2.

Un frein-moteur plus efficace peut être obtenu en plaçant en position de blocage le moyen de blocage 38 de la couronne 31, de façon à augmenter la vitesse de rotation de la roue planétaire 28 du réducteur 27 par rapport à celle de la couronne 16, pour faire fonctionner le moteur selon un rapport correspondant sensiblement à la situation $P'_2$.

Un frein-moteur encore plus efficace est obtenu en débloquant le moyen 38 et le moyen 37 et en bloquant le moyen 36, auquel cas la transmission est bloquée dans la situation $P'_1$, la couronne 31 tournant à grande vitesse dans le sens rétrograde.

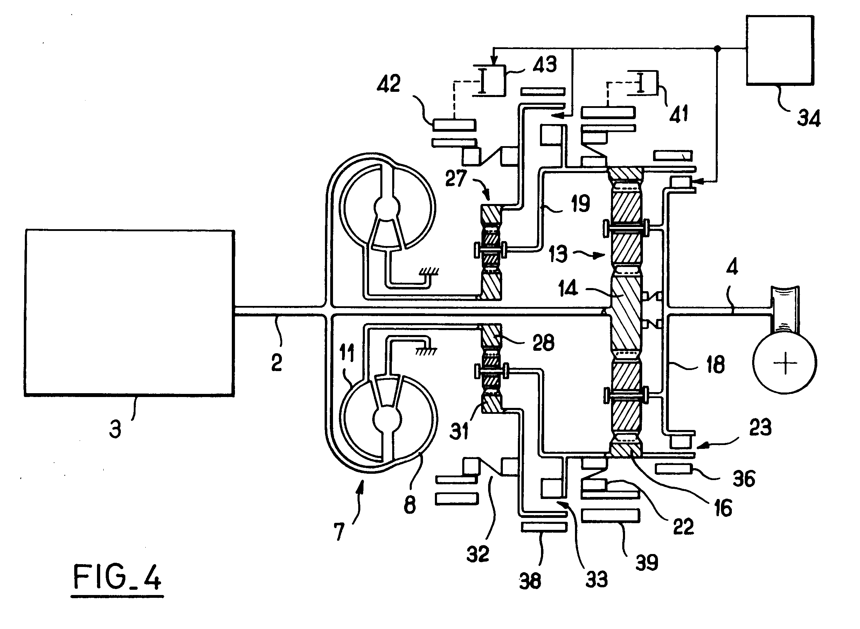

Le mode de réalisation de la figure 4 ne sera décrit qu'en ce qui concerne ses différences par rapport à celui de la figure 3.

L'embrayage centrifuge d'entrée 9 est supprimé, de sorte que l'entrée 2 de la transmission est reliée directement à la pompe 8 du convertisseur de couple 7 et à la roue planétaire 14 du mécanisme différentiel 13.

Le support de la roue libre 22 est associé à un frein 39 commandé par un actionneur pneumatique 41 sous l'action de la pression régnant dans la tubulure d'admission du moteur 3. Le moyen de blocage 37 de la roue libre 32 est remplacé par un embrayage 42 commandé par un actionneur 43 fonctionnant par la pression régnant dans la tubulure d'admission, sous le contrôle du boîtier de pilotage 34.

Ce mode de réalisation fonctionne suivant les mêmes phases P'$_1$, P'$_2$, P'$_3$ et P'$_4$ que celui de la figure 3. Seul le mode de passage d'une phase à l'autre diffère quelque peu.

Lorsque le moteur 3 tourne au ralenti, tous les embrayages et moyens de blocage sont à l'état relâché. Le moteur 3 entraîne la pompe 8 et la roue planétaire 14, ce qui produit une rotation en sens rétrograde de la couronne 16 puisque le porte-satellites 18 est immobile, le véhicule étant supposé à l'arrêt. Cette rotation de la couronne 16 en sens rétrograde entraîne une rotation également en sens rétrograde de la couronne 31 du réducteur 27 puisqu'une telle rotation ne rencontre aucune résistance alors que la roue planétaire 28 du réducteur 27 est entraînée par le convertisseur 7 sensiblement à la même vitesse que l'entrée 2.

Lorsque le conducteur appuie sur la pédale d'accélérateur en vue de démarrer, une augmentation de pression (une diminution de la dépression) est transmise à l'actionneur 41 qui commande le serrage progressif de l'embrayage 39, ce qui établit une situation analogue à celle de la figure 3, c'est-à-dire que la couronne 16 est empêchée de tourner en sens rétrograde.

On aurait pu initier la phase P'$_1$ en serrant l'embrayage 42 en même temps que l'embrayage 39. Mais en ne serrant pas tout de suite l'embrayage 42, on supprime l'action (inutile) du convertisseur 7 pendant la phase P'$_1$. Ceci a l'intérêt d'améliorer encore le rendement, d'autant plus que dans ce mode de réalisation où le convertisseur 7 tourne déjà lorsqu'on initie le démarrage, le délai d'activation de l'huile du convertisseur est moindre. Autre avantage, le boîtier 34, qui pilote le serrage de l'embrayage 42, contrôle ainsi le déclenchement de la phase P'$_2$ et peut ainsi retarder ou avancer ce déclenchement en fonction des paramètres de fonctionnement.

Les phases P'$_2$, P'$_3$ et P'$_4$ se succèdent ensuite de la même manière que dans le mode de réalisation de la figure 3. Pour le fonctionnement en frein-moteur, l'embrayage 39 reste à l'état embrayé, les moyens de blocage 36, 38 et l'embrayage 42 sont commandés de la même manière que l'étaient respectivement les moyens de blocage 36, 38 et 37 de la figure 3.

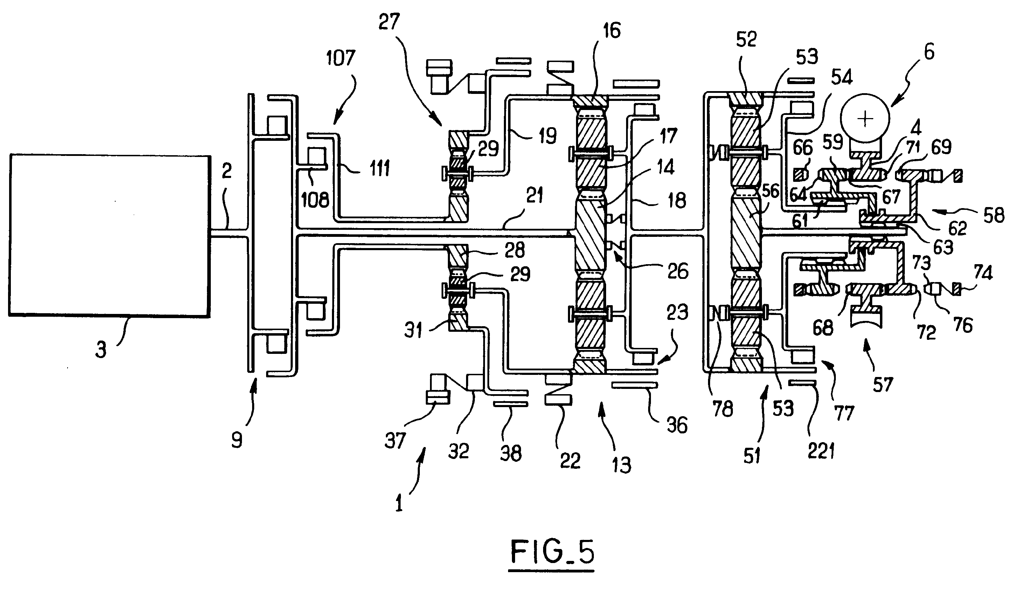

Dans l'exemple de la figure 5, qui ne sera décrit qu'en ce qui concerne ses différences par rapport à celui de la figure 3, le premier accès 18 est relié à la sortie 4 de la transmission par l'intermédiaire d'un différentiel additionnel 51 qui sera décrit plus loin.

Le deuxième accès 19 du mécanisme différentiel 13, solidaire en rotation de la couronne 16, est relié à l'entrée 2 du dispositif par l'intermédiaire de deux embrayages centrifuges 9 et 107 successifs. L'un de ces embrayages, celui qui est directement adjacent à l'entrée 2, est l'embrayage 9 déjà décrit.

L'autre 107 de ces deux embrayages centrifuges constitue le moyen d'accouplement sélectif pour relier avec possibilité de glissement angulaire relatif l'entrée 2 avec le deuxième accès 19 du mécanisme différentiel 13 par l'intermédiaire d'un réducteur planétaire 27.

Plus particulièrement, l'organe menant 108 de l'embrayage centrifuge 107 constitue en même temps l'organe mené de l'embrayage 9. L'organe mené 111 de l'embrayage 107 est relié à la roue planétaire 28 du réducteur 27.

Le troisième accès 21 du mécanisme différentiel 13 est solidaire en rotation de la roue planétaire 14 et de l'organe menant 108 de l'embrayage 107.

L'embrayage centrifuge 107 est sensible à la vitesse de rotation de l'entrée 2, telle qu'elle est transmise à son organe menant 108 par l'intermédiaire de l'embrayage 9, pour passer à l'état embrayé lorsque la vitesse de rotation de l'entrée 2 franchit dans le sens croissant un intervalle de vitesses qui, en valeur, est situé au-dessus du seuil de vitesse auquel est sensible l'embrayage 9. Cet intervalle de vitesses est en outre variable comme une fonction croissante du couple tendant à passer par l'embrayage 107. Cet intervalle peut par exemple avoir une largeur de 500 tours/minute et son centre peut évoluer entre 2 000 et 4 000 tours/minute en fonction du couple à transmettre. On décrira plus loin un mode de réalisation d'un tel embrayage.

L'embrayage 23 est sensible à la vitesse de rotation du premier accès 18 du mécanisme différentiel pour accoupler progressivement les premier et deuxième accès 18 et 19 l'un avec l'autre lorsque la vitesse de rotation du premier accès 18 franchit dans le sens croissant un certain intervalle de vitesses de rotation. Comme dans l'embrayage 107, des moyens sont prévus pour élever les valeurs de cet intervalle de vitesses de rotation lorsque le couple à transmettre croît.

Lorsque l'embrayage 107 est serré mais que l'embrayage 23 est désaccouplé et permet ainsi au deuxième accès 19 de tourner à une vitesse différente de l'organe mené 111, le réducteur planétaire 27 réduit la vitesse de rotation du deuxième accès 19 par rapport à la vitesse de rotation de l'organe mené 111, car la couronne 31, qui tend à tourner en sens rétrograde, en est empêchée par la roue libre 32 et se trouve donc immobilisée. Le rapport de réduction peut être, par exemple, de 2, 5 à 1.

Au contraire, lorsque l'embrayage 23 est en prise, tout l'ensemble comprenant les embrayages 9 et 107, le réducteur planétaire 27 et le mécanisme différentiel 13 se comporte en prise directe et tourne d'un seul bloc.

Par rapport au dispositif de la figure 3, l'embrayage entre le deuxième accès 19 et la couronne dentée 31 est supprimé. Il est en effet devenu inutile car quand l'embrayage 107 est à l'état embrayé, le passage de l'embrayage 23 à l'état embrayé, qui intervient pour des vitesses plus élevées du premier accès 18, solidarise indirectement le porte-satellites 19 avec la roue planétaire 28, de sorte que la couronne 31 est elle-même obligée de tourner à la vitesse du porte-satellites 19. Ceci résulte du fait que le convertisseur de la figure 3 a été remplacé par l'embrayage 107 qui à l'état embrayé ne produit pas de glissement angulaire relatif.

De même, le dispositif de pilotage de l'embrayage 23 a été supprimé.

Le différentiel additionnel 51 est réalisé sous la forme d'un train planétaire comprenant une couronne 52 constituant l'organe d'entrée et reliée au premier accès 18 du mécanisme différentiel 13. La couronne 52 engrène avec des satellites 53 supportés par un porte-satellites 54 qui constitue l'organe de sortie. Les satellites 53 engrènent aussi avec une roue planétaire 56 du différentiel 51.

Le différentiel additionnel 51 est associé à un dispositif 57 de sélection du sens de marche de l'essieu-moteur 6. Le dispositif de sélection 57 comprend un baladeur complexe 58 comprenant un baladeur individuel 59 lié en rotation avec le porte-satellites 54 mais mobile axialement par rapport à celui-ci grâce à des canelures 61, et un baladeur individuel 62 lié en rotation avec la roue planétaire 56 mais mobile axialement par rapport à celle-ci grâce à des cannelures 63. Les deux baladeurs individuels 59, 62 peuvent tourner à des vitesses différentes mais sont liés l'un à l'autre pour les déplacements le long de l'axe, qui sont commandés par un mécanisme manuel non représenté, connu en soi. Le baladeur 59 comporte un crabot 64 capable de coopérer avec un crabot fixe 66 pour immobiliser le porte-satellites 54 et un crabot 67 pouvant coopérer avec un crabot 68 correspondant de la sortie 4 pour accoupler la sortie 4 avec le porte-satellites 54.

Le baladeur individuel 62 comprend un crabot 69 pour coopérer avec un crabot correspondant 71 de la sortie 4 de manière à accoupler la roue planétaire 56 avec la sortie 4, et un crabot 72 pouvant coopérer sélectivement avec un crabot correspondant 73 relié à un carter 74 du dispositif de transmission 1 par l'intermédiaire d'une roue libre 76 empêchant le crabot 73 de tourner dans le sens rétrograde.

A la partie supérieure de la figure 5, on voit le baladeur 58 en position de marche avant : le baladeur individuel 59 relie le porte-satellites 54 avec la sortie 4, libère le porte-satellites 54 du crabot fixe 66, tandis que le baladeur individuel 62 libère la sortie 4 de la roue planétaire 56 et relie la roue planétaire 56 avec le carter 74 par l'intermédiaire de la roue libre 76.

Pour passer en marche arrière, on déplace le baladeur complexe 58 vers la gauche de la figure 5, comme représenté en bas de cette figure, ce qui effectue simultanément les opérations suivantes : désaccouplement du porte-satellites 54 relativement à la sortie 4 et immobilisation en rotation du porte-satellites 54 grâce au crabot 66, accouplement de la sortie 4 avec la roue planétaire 56 et libération de la roue planétaire 56 à l'égard du carter 74.

Dans cette dernière situation, le porte-satellites 54 est donc empêché de tourner, de sorte que les satellites 53 se comportent en inverseurs de mouvement faisant tourner la roue planétaire 56 en sens rétrograde lorsque la couronne 52 tourne dans le sens avant.

Il est en outre prévu un embrayage centrifuge 77 qui relie progressivement l'un avec l'autre le porte-satellites 54 avec la couronne 52 lorsque la vitesse de rotation du porte-satellites 54 franchit un certain intervalle de vitesse de rotation de manière à faire fonctionner en prise directe le différentiel additionnel 51 lorsque la vitesse de rotation du porte-satellites 54 est située au-delà de cet intervalle. Comme pour les embrayages 107 et 23, cet intervalle de vitesse se déplace vers des valeurs plus élevées lorsque le couple à transmettre devient lui-même plus élevé.

Ainsi, le fonctionnement en marche avant est le suivant : lorsque l'embrayage 77 est à l'état débrayé, la roue planétaire 56 constitue un organe de réaction immobile et le porte-satellites 54 tourne en sens direct à une vitesse inférieure à celle de la couronne 52. La sortie 4 tourne à la même vitesse que le porte-satellites 54. Lorsque l'embrayage 77 est à l'état embrayé, l'ensemble du différentiel 51 est à l'état de prise directe, la roue planétaire 56 tourne à la même vitesse que le porte-satellites 54 et la couronne 52, comme le permet la roue libre 76, qui n'interdit que la rotation en sens rétrograde. La sortie 4 tourne alors à la même vitesse que le premier accès 18 du mécanisme différentiel 13.

Il a également été prévu entre la couronne 52 et le porte-satellites 54 une roue libre 78 qui a pour fonction de permettre le fonctionnement en frein-moteur en empêchant le porte-satellites 54 de tourner plus vite que la couronne 52.

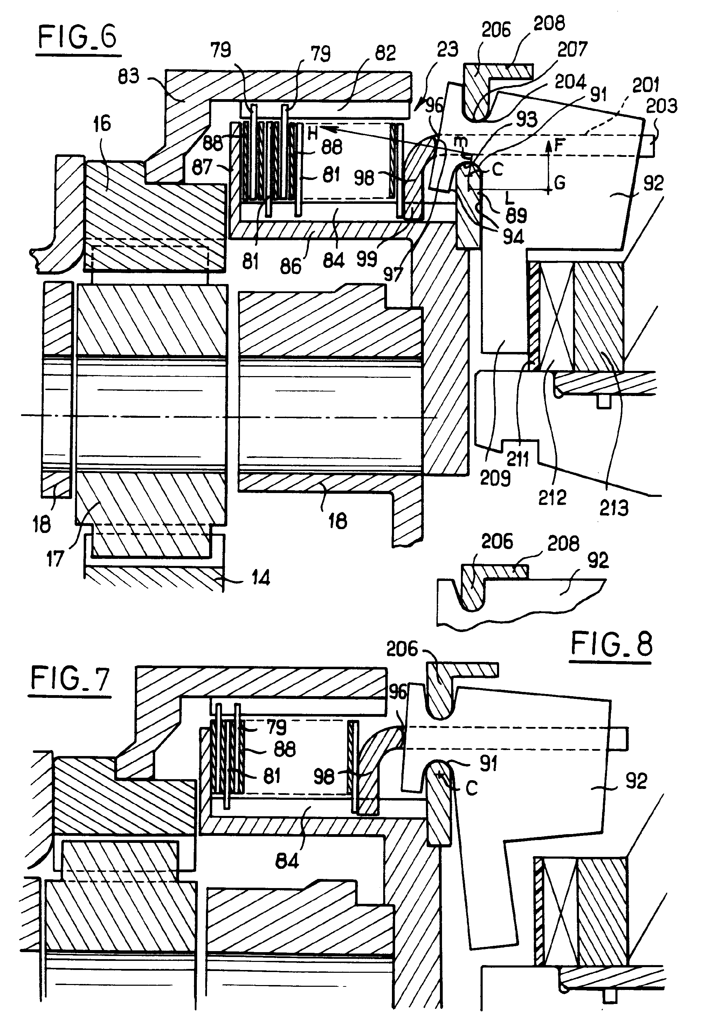

On va maintenant décrire en référence aux figures 6 à 9 un embrayage centrifuge qui concilie les effets techniques et avantages de grande simplicité de réalisation, de grande progressivité de fonctionnement, de faible poids, de faible encombrement, et de sensibilité au couple à transmettre pour faire croître la valeur de vitesse à partir de laquelle l'état embrayé est atteint lorsque le couple à transmettre croît.

Cet embrayage est décrit en prenant l'exemple de l'embrayage 23, mais il sera clair que cette description peut s'appliquer aussi bien à l'embrayage 107 ou à l'embrayage 77, ou même également à l'embrayage 9 qui pourrait également être réalisé de cette manière.

L'embrayage 23 est un embrayage du type multidisques c'est-à-dire qu'il comprend une alternance de disques 79 qui sont solidaires en rotation de la couronne 16 et de disques 81 qui sont solidaires en rotation du porte-satellites 18. Les disques 79 comportent une denture périphérique extérieure qui engrène de manière axialement coulissante avec des cannelures intérieures 82 d'un collet 83 solidaire de la couronne 16. Les disques 81 comprennent une denture intérieure qui engrène de manière axialement coulissante avec des cannelures extérieures 84 qui sont formées sur un collet 86 solidaire du porte-satellites 18 et terminé par une butée fixe 87 pour les disques 79 et 81. Les cannelures extérieures 84 sont entourées par les cannelures intérieures 82 du collet 83.

Selon une particularité importante de l'embrayage 23, une bague de friction folle 88 est interposée dans chaque intervalle entre deux disques successifs 79 et 81. Les bagues de friction folles 88 sont par exemple réalisées en bronze si les disques 79, 81 sont réalisés en acier. Les bagues 88 n'engrènent ni avec les cannelures 82 ni avec les cannelures 84 mais sont centrées par leur alésage sur les sommets des cannelures 84. Les bagues folles 88 ont une épaisseur de par exemple 0,5 mm, les disques 79, 81 ayant par exemple une épaisseur de 0,8 mm. On peut donc empiler ainsi un nombre considérable de disques et de bagues dans un encombrement axial très limité.

En fonctionnement, les bagues prennent une vitesse qui est la moyenne des vitesses des disques 79 et 81, ce qui divise par deux toutes les vitesses de frottement dans l'embrayage et multiplie par deux les surfaces exposées à l'échauffement.

Du côté opposé à la butée 87, les cannelures 84 sont limitées axialement par une bague amovible 89 ayant une bordure radialement extérieure arrondie en demi-cercle 91. L'embrayage comporte en outre une série de masselottes 92 constituées chacune par une plaquette métallique disposée dans un plan axial du dispositif de transmission. Chaque masselotte 92 comporte dans son pourtour, sur son bord radialement intérieur, une encoche 93 dans laquelle est reçue la bordure 91. L'encoche 93 de chaque masselotte 92 a un fond en forme de segment de cercle, de même rayon R que le profil de la bordure 91, et deux bords latéraux 94 qui divergent l'un par rapport à l'autre à partir du fond de l'encoche selon un angle à peu près égal à 15°. Les masselottes 92 sont ainsi montées de manière basculante sur la bordure périphérique 91. Le centre de gravité G des masselottes 92 est situé du côté de la bague 89 qui est opposé aux disques 79 et 81. Au repos, les masselottes 92 ont la position représentée à la figure 6, avec le centre de gravité G relativement proche de l'axe de rotation (non représenté à la figure 6) du porte-satellites. Lorsque le porte-satellites est en rotation, la force centrifuge s'exerçant sur les masselottes au centre G fait basculer les masselottes autour du centre C du profil en demi-cercle de la bordure 91 comme représenté à la figure 7.

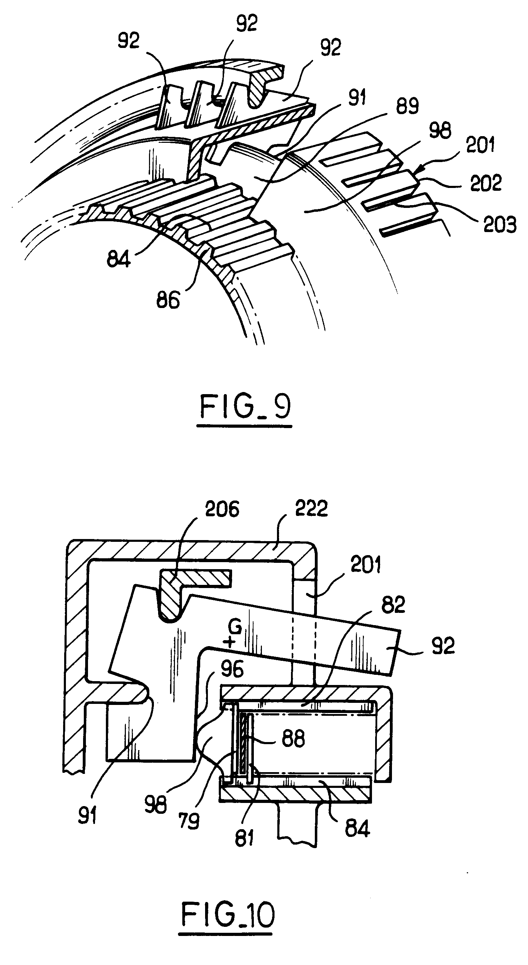

On a représenté à la figure 9 trois des masselottes 92 mais il doit être bien entendu que les masselottes sont régulièrement réparties sur tout le pourtour du dispositif de transmission. Il peut y avoir par exemple quarante masselottes pesant quelques grammes, par exemple 7 grammes chacune.

Chaque masselotte 92 présente en direction des disques 79 et 81 une face d'actionnement 96 qui a une composante de mouvement dirigée axialement vers les disques 79 et 81 lorsque le centre de gravité G pivote radialement vers l'extérieur sous l'action de la force centrifuge. La face d'actionnement 96 de chaque masselotte est appuyée contre une face courbe 97 appartenant à une bague de poussée 98 commune à toutes les masselottes, qui est interposée entre les masselottes 92 et les disques 79, 81, et qui comporte sur son bord radialement intérieur une denture 99 qui engrène de manière axialement coulissante avec les cannelures extérieures 84 du collet 86.

Ainsi, comme représenté à la figure 7, lorsque les masselottes se déplacent radialement vers l'extérieur sous l'action de la force centrifuge, leur face d'actionnement 96 pousse la bague de poussée 98 vers les disques et celle-ci se déplace le long des cannelures 84 dans le sens de la compression des disques 79, 81 et des bagues folles 88 interposées entre eux. A la figure 6, on a exagéré l'espacement entre les disques lorsque l'embrayage est à l'état desserré. En réalité cet espacement ne serait pas visible à l'oeil nu, de sorte que le déplacement de la bague 98 qui est nécessaire pour faire passer l'embrayage de son état débrayé à son état embrayé peut être très faible, par exemple de l'ordre de 1 mm. A la figure 9, on a enlevé fictivement une partie de la bague 98 pour montrer le montage à bascule de l'une des masselottes 92 sur la bordure 91. En réalité, la bague 98 s'étend sur tout le pourtour du collet 86.

La bague 98 est rattachée par son pourtour extérieur à une cage 201 qui s'étend axialement en direction opposée aux disques 79 et 81 jusqu'à une extrémité axiale 202 à travers laquelle s'ouvrent des fentes 203 dirigées axialement, dans chacune desquelles est guidée l'une des masselottes 92 pour la maintenir dans son plan axial respectif au cours de son mouvement de bascule autour de la bordure 91.

Comme le montre la figure 6, la cage 201 passe radialement au-delà de la bordure 91 entre cette dernière et le bord radialement intérieur 204, arrondi en demi-cercle, d'une bague de ceinture 206. Chaque masselotte 92 présente dans la partie radialement extérieure de son pourtour une encoche 207 ayant un fond en segment de cercle et deux bords divergeant selon un angle d'environ 15°. Les encoches 207 reçoivent de manière basculante le bord 204 de la bague 206. L'emplacement de l'encoche 207 sur chaque masselotte 92 est choisi pour que l'encoche 207 ait un déplacement presque purement axial lorsque la masselotte bascule autour du centre C de la bordure 91. A cet effet, les encoches 207 sont disposées de façon que le bord 204 de la bague 206 se déplace de part et d'autre du plan de la bague 89. La bague de ceinture 206 a pour but d'empêcher les masselottes de s'échapper librement vers l'extérieur en direction radiale, et aussi pour but de coupler ensemble les masselottes dans leur mouvement de basculement autour de la bordure 91.

Dans sa région radialement extérieure, la bague de ceinture 206 présente en outre une aile de butée 208 de forme générale cylindrique, contre laquelle butent les masselottes 92 dans une position d'écartement radial maximal représentée à la figure 8. Cette position est atteinte lorsque l'état d'usure des disques 79, 81 et des bagues 88 est maximal. Dans ce cas, l'appui en butée des masselottes 92 sur l'aile de butée 208 de la bague 206 empêche les masselottes 92 de s'écarter excessivement et de venir par exemple frotter contre un carter dans lequel le dispositif de transmission est enfermé.

Aux figures 6 et 7, chaque masselotte 92 définit par son contour un appendice 209 dirigé vers l'axe du mécanisme et sur lequel peut s'appuyer sélectivement une garniture 211 elle-même appuyée par l'intermédiaire d'une butée à billes 212 sur un poussoir annulaire 213 pour maintenir l'embrayage à l'état débrayé si l'on désire que la transmission fonctionne avec un rapport de démultiplication plus grand que celui qui tend à s'établir de manière automatique dans le dispositif de transmission pour des conditions données.

A la figure 6, on a représenté la garniture 211 dans la position empêchant le passage à l'état embrayé, tandis que la position permettant le passage à l'état embrayé a été représentée à la figure 7.

Par ailleurs, comme cela est classique pour les embrayages multi-disques des transmissions automatiques usuelles, l'embrayage multi-disques selon la présente invention fonctionne avec lubrification des disques 79, 81 et des bagues folles 88.

Les moyens 211, 212, 213, représentés aux figures 6 et 7 ne sont pas représentés à la figure 5, ils offrent une possibilité supplémentaire pour le fonctionnement de la boîte de vitesses mais ne sont pas indispensables.

On va maintenant exposer le fonctionnement de l'embrayage multi-disques selon la présente invention.

Le bras de levier L qu'a la force centrifuge F s'exerçant au centre G autour du centre de rotation C est nettement supérieur au bras de levier m qu'a autour du même centre C la force d'appui H de la face 96 sur le bord 97 de la bague 98. Le couple de la force F autour du centre C est équilibré par le couple de réaction de la bague 98 sur les masselottes 92 et on a par conséquent la relation :

$$F \times L = H \times m,$$

donc

$$H = F \times L/m.$$

Ainsi, dans l'exemple représenté où L est environ quatre fois plus grand que $\underline{m}$, la force H subie par la bague 98 est égale à environ quatre fois la force centrifuge engendrée par les masselottes 92.

La force H produit sur chaque disque 79 ou 81, une force de frottement tendant à faire tourner les disques 79 et 81 à la même vitesse. Comme chaque disque subit la totalité de la force de compression H de toutes les masselottes 92, une augmentation du nombre de disques 79 et 81 et par conséquent de bagues folles 88 correspond à une diminution de la vitesse à partir de laquelle l'embrayage est à l'état serré. Ainsi, en d'autres termes, la multiplicité des disques 79 et 81 est un autre facteur d'amplification de la force centrifuge engendrée par les masselottes 92. C'est grâce à cette double amplification de la force centrifuge et aussi grâce à la possibilité d'avoir un grand nombre de masselottes réparties sur le pourtour de l'embrayage que des masselottes de masse unitaire étonnemment faible (par exemple 7 grammes) suffisent à faire passer à l'état embrayé un embrayage transmettant une puissance appréciable. Comme déjà exposé plus haut, les bagues folles 88 multiplient par deux les surfaces de friction entre les disques successifs, ce qui divise les vitesses de frottement par deux car chaque bague prend une vitesse qui est la moyenne de celles des deux disques entre lesquels elle se trouve. Il a en effet été vérifié que, contrairement à ce qu'on pourrait penser, les bagues 88 ne tendent pas à adhérer à l'un des disques et à reporter tout le frottement sur l'interface avec l'autre disque.

De plus, grâce aux très nombreuses surfaces de friction, il y a une course appréciable de la bague d'appui 98 entre le moment où le processus d'embrayage commence à partir de l'état débrayé et celui où l'état totalement embrayé est atteint. Cette course appréciable, par exemple 1 mm, donne à l'embrayage une grande progressivité et le processus d'embrayage s'étale sur une certaine plage de vitesses au lieu de se produire pour une vitesse précise.

De plus encore, comme la force de pression exercée par la bague de pression 98 est une fonction croissante de la vitesse de rotation des masselottes 92 autour de l'axe du mécanisme, et que d'autre part la force de compression à appliquer à l'embrayage pour assurer l'embrayage complet est fonction du couple à transmettre, l'intervalle de vitesses au cours duquel a lieu l'embrayage se déplace vers les valeurs élevées lorsque le couple à transmettre est plus important.

Par conséquent, l'embrayage selon la présente invention fournit deux résultats intéressants pour les transmissions de véhicules automobiles :

- le rapport de transmission varie de manière progressive au cours du processus d'embrayage ; et
- le changement vers un rapport de moindre démultiplication se produit à des vitesses d'autant plus élevées que le couple à transmettre est plus important.

A partir de l'état embrayé, un processus de débrayage commence si la vitesse de rotation des masselottes 92 franchit en direction des valeurs basses un intervalle de vitesses qui une fois encore dépend du couple à transmettre. Pour un couple donné cet intervalle de vitesses est plus bas que l'intervalle de vitesses du processus d'embrayage. Ce phénomène, qui résulte d'un certain effet de collage des disques entre eux lorsqu'ils sont en prise, correspond également à ce que l'on souhaite pour la transmission dans les véhicules automobiles.

L'embrayage selon la présente invention a en outre l'avantage d'être très facile à monter. La bague 89 n'étant pas encore associée avec le porte-satellites, on met en place les disques 79 et 81 et les bagues 88 par coulissement axial entre les deux collets 83 et 86. On termine cet empilement en plaçant la bague de pression 98 sur les cannelures 84. Par ailleurs, on monte les masselottes 92 entre la bague 89 et la bague de ceinture 206. Pour cela, on engage chaque masselotte 92 à plat entre la bague 206 et la bague 89, puis on la fait pivoter de 90°. En d'autres termes, on procède pour chaque masselotte 92 à un montage du type quart de tour. Lorsque toutes les masselottes 92 ont ainsi été montées, on amène axialement cet ensemble vers le porte-satellites en engageant chaque masselotte dans la fente correspondante 203 de la cage 201. Il suffit ensuite de fixer par exemple au moyen de vis la bague 89 sur la face frontale du collet 86.

Pour réaliser un embrayage ayant des caractéristiques déterminées, on choisit en conséquence le nombre de disques 79 et 81 et le nombre de masselottes 92. Pour obtenir un embrayage ayant davantage de progressivité sans modifier la vitesse pour laquelle l'embrayage a lieu pour un couple à transmettre donné, on peut augmenter le nombre de disques et réduire dans la même proportion le nombre de masselottes.

Le fonctionnement du dispositif de transmission de la figure 5 dans son ensemble est le suivant. Dans la suite, on considérera que tous les embrayages centrifuges ont la structure décrite en référence aux figures 6 à 9 à propos de l'embrayage 23. On considérera d'autre part que les moyens de blocage 36, 38 et 211 sont à l'état débloqué et le moyen de blocage 37 à l'état bloqué jusqu'à ce qu'on aborde la question du fonctionnement en frein-moteur.

Lorsque le moteur 3 tourne au ralenti, l'embrayage centrifuge 9 est désaccouplé, de sorte que l'ensemble du dispositif de transmission 1 exceptée l'entrée 2 est immobile si les roues du véhicule sont immobiles.

Si l'on fait augmenter la vitesse de rotation de l'entrée 2, en agissant sur le moteur 3, l'embrayage centrifuge 9 réalise l'accouplement entre l'entrée 2 et d'une part l'organe menant 108 de l'embrayage 107 et d'autre part le troisième accès 21, c'est-à-dire la roue planétaire 14 du train planétaire 13. A ce stade, l'embrayage 107 est à l'état débrayé. Le fonctionnement correspond alors à celui de la phase P'1 de la figure 2. Il s'agit d'un premier rapport de la transmission.

La vitesse de rotation de l'entrée 2 continuant d'augmenter le processus d'embrayage commence dans l'embrayage centrifuge 107, et ce dernier transmet un couple à l'accès 19 du train planétaire 13. Ce couple est transmis à la couronne 16 par le réducteur 27 qui le multiplie dans un rapport de par exemple 2,5. La couronne 31 du réducteur 27 tend à tourner en sens rétrograde, ce qu'empêche la roue libre 32. Au début, le couple ainsi multiplié est inférieur au couple transmis en sens inverse à la couronne 16 par les satellites 17, compte tenu de la vitesse de rotation encore faible de l'organe menant 108, donc des masselottes qu'il entraîne. La couronne 16 tend donc encore à tourner en sens rétrograde et continue de prendre son appui de réaction sur le bâti par l'intermédiaire de la roue libre 22 qui empêche ce mouvement.

Dès que l'embrayage 107 produit un couple d'entraînement suffisant sur l'organe mené 111, la couronne 16 se met en rotation en sens avant et transmet ainsi au porte-satellites 18 une puissance utile qui s'ajoute à celle transmise par l'intermédiaire de la roue planétaire 14. A ce stade, le mécanisme différentiel 13 fonctionne en additionneur de puissance.

Le couple transmis par l'embrayage 107 sur l'organe mené 111 augmentant, la couronne 16 prend une vitesse angulaire croissante qui atteint la vitesse angulaire de la roue planétaire 14, telle que divisée par le rapport de réduction dans le réducteur 27, lorsque l'embrayage 107 atteint l'état complètement embrayé. Le rapport de transmission initial du dispositif 1 passe donc progressivement d'une valeur qui est par exemple de 4 à 1 à une valeur qui est de 1,8 à 1 (rapport entre la vitesse de rotation de la roue planétaire 14 et le porte-satellites 15 lorsque la couronne 16 tourne 2,5 fois moins vite que la roue 14). Il s'agit là d'un deuxième rapport du dispositif de transmission. Comme exposé plus haut, l'intervalle de vitesses de rotation de l'entrée 2 pour lequel le passage progressif du premier au deuxième rapport a lieu est fonction du couple à transmettre. En effet, une vitesse accrue produisant une force de serrage accrue dans l'embrayage sera nécessaire pour transmettre un couple accru. on notera que les pertes dues aux frottements dans l'embrayage 107 sont étonnemment faibles, l'usure s'avère très faible également, grâce à la structure d'embrayage selon l'invention et aussi car seule une partie minoritaire de la puissance passe par l'embrayage 107 lorsque celui-ci patine.

Quand la vitesse angulaire du porte-satellites 18 franchit dans le sens croissant l'intervalle de vitesses défini par l'embrayage 23 en fonction du couple à transmettre, l'embrayage 23 accouple le porte-satellites 18 avec la couronne 16 de sorte que l'ensemble du dispositif de transmission 1 entre l'entrée 2 et le porte-satellites 18, tourne à la vitesse de l'entrée 2. Ceci correspond à un troisième rapport du dispositif de transmission.

Comme l'embrayage 107, l'embrayage 23 ne transmet qu'une partie de la puissance pendant le patinage.

Pendant toutes les étapes de fonctionnement ci-dessus, l'embrayage centrifuge 77 était à l'état désaccouplé.

Ensuite, la vitesse du porte-satellites 54 franchit dans le sens croissant l'intervalle de vitesses pour lequel l'embrayage 77 passe progressivement à l'état embrayé, réalisant une prise directe dans l'ensemble du dispositif de transmission, ce qui correspond à un quatrième rapport du dispositif de transmission.

En fonctionnement en frein-moteur, les roues libres 26 et 78 entre l'entrée 2 et la sortie 4 empêchent en tout état de cause la sortie 4 de tourner plus vite que l'entrée 2.

Un frein-moteur plus efficace peut être obtenu en plaçant en position de blocage un moyen de blocage 221 de la couronne 52 pour obliger le train 51 à fonctionner en réducteur, avec le cas échéant utilisation d'un moyen tel que 211, 212, 213 (figures 6 et 7) pour le passage forcé de l'embrayage 77 à l'état débrayé.

Un frein-moteur encore plus efficace peut être obtenu en plaçant simultanément en position de blocage les moyens de blocage 38 et 211 des couronnes 31 et respectivement 52, de façon à augmenter en outre la vitesse de rotation de la roue planétaire 28 du réducteur 27 par rapport à celle de la couronne 16, pour faire fonctionner le dispositif de transmission selon le deuxième rapport de la transmission.

Un frein-moteur encore plus efficace est obtenu en débloquant le moyen 38 et le moyen 37 et en bloquant le moyen 36, auquel cas la transmission est bloquée en premier rapport de transmission, la couronne 31 tournant à grande vitesse dans le sens rétrograde.

La figure 10 montre un autre exemple d'embrayage selon l'invention, qui se distingue de celui des figures 6 à 9 en ce que la cage 201 et la bordure périphérique 91 sont solidaires des cannelures intérieures 82. La cage 201 n'est donc plus mobile axialement et sert à relier les cannelures 82 avec la bordure 91 par l'intermédiaire d'une cloche périphérique 222 qui entoure les masselottes 92 et la bague de ceinture 206. La bordure 201 est située presque en regard de la bague de poussée 98, avec toutefois un décalage radial de la bordure 91 vers l'extérieur, pour que le mouvement de la surface d'actionnement 96 de la masselotte ait une composante axiale dans le sens de la compression des disques d'embrayage 79, 81 lorsque le centre de gravité G de la masselotte se déplace radialement vers l'extérieur.

Les quatre modes de réalisation qui viennent d'être décrits peuvent fonctionner sans hydraulique de commande, et sont extrêmement légers, compacts et économiques. En particulier, les composants du genre roue libre, embrayage centrifuge, moyens de blocage, sont des composants du commerce à très faible prix de revient. Tous les embrayages entre deux organes mobiles sont simples car actionnés par la force centrifuge. Pour donner un ordre de grandeur, on peut dire qu'une transmission selon l'invention coûte cinq à dix fois moins cher à fabriquer qu'une transmission automatique actuelle, et son encombrement est environ deux à trois fois moins important. De plus, la consommation de carburant et les performances à vitesse réduite sont très sensiblement améliorées.

Bien entendu, l'invention n'est pas limitée aux exemples décrits et représentés.

On pourrait imaginer de simplifier encore le dispositif de la figure 1 en supprimant l'embrayage centrifuge 9 et la roue libre 22, l'entrée 2 étant alors directement reliée à la pompe 8. Au ralenti, la roue planétaire 14 est entraînée en sens avant, et la couronne 16 en sens rétrograde compte tenu de l'immobilité du porte-satellites 18, le véhicule étant supposé à l'arrêt. Cette rotation en sens rétrograde est transmise à la turbine 11, laquelle est donc obligée de tourner en sens contraire de la pompe 8, ce qui conduit à un échauffement de l'huile et à une perte de puissance.

A partir de la réalisation de la figure 5, on pourrait réaliser un dispositif à seulement deux rapports à transition progressive entre l'un et l'autre, en supprimant le réducteur 27, le différentiel additionnel 51, et l'un des embrayages 107 et 23, et en reliant directement le porte-satellites 18 avec la sortie 4.

On pourrait aussi réaliser un dispositif à trois rapports en supprimant le différentiel additionnel 51 et en reliant le porte-satellites 18 avec la sortie 4.

Le différentiel 51 pourrait être interposé entre l'organe mené de l'embrayage 9 d'une part et l'organe menant 108 (demeurant lui-même relié à l'accès 21) d'autre part.

Il pourrait y avoir plusieurs bagues folles telles que 88 dans chaque intervalle entre deux disques successifs tels que 79 et 81.

## Revendications

1. Dispositif de transmission à rapport variable, en particulier pour l'automobile, comprenant, entre une entrée (2) et une sortie (4) du dispositif, un mécanisme différentiel (13) à trois accès (18, 19, 21) dont, au moins pendant certaines phases du fonctionnement :
   - un premier accès (18) du mécanisme différentiel est relié à la sortie (4) du dispositif ;
   - un deuxième accès (19) du mécanisme différentiel est relié à un organe mené (11, 111) d'un premier moyen d'accouplement sélectif (7, 107) pour le passage d'un premier rapport de transmission à un deuxième rapport de transmission dans lequel la vitesse de rotation de la sortie (4) est plus grande, par rapport à celle de l'entrée, que lors du fonctionnement selon le premier rapport, un organe menant (8), 108) du moyen d'accouplement sélectif étant relié à l'entrée du dispositif ;
   - un troisième accès (21) du mécanisme différentiel (13) est relié à l'entrée (2) du dispositif (1) indépendamment du premier moyen d'accouplement (7, 107),

   des moyens (22) étant prévus pour empêcher la rotation du deuxième accès (19) en sens rétrograde lorsque pour le fonctionnement selon le premier rapport de transmission, le premier moyen d'accouplement sélectif (7, 107) libère le deuxième accès (19) relativement à l'entrée (2), le premier moyen d'accouplement sélectif (7, 107) étant d'un type activé en fonction d'une vitesse de rotation de ce moyen d'accouplement et autorisant un glissement angulaire relatif avec transmission d'un couple qui est fonction de cette vitesse de rotation, de manière que le passage au deuxième rapport se décale automatiquement vers les vitesses plus élevées lorsque le couple à transmettre est plus élevé, caractérisé en ce qu'à l'état accouplé, le premier moyen d'accouplement sélectif (7) active, pour le deuxième rapport de transmission, une liaison avec réduction de vitesse entre l'entrée (2) du dispositif et le deuxième accès (19) du mécanisme différentiel, et en ce qu'il est prévu un second moyen d'accouplement sélectif (23) sensible à une vitesse de rotation pour réaliser un autre rapport de transmission correspondant à des conditions de prise directe entre le premier et le troisième accès du mécanisme différentiel.

2. Dispositif conforme à la revendication 1, caractérisé en ce que le deuxième moyen d'accouplement sélectif (23, 24) est un moyen automatique sensible à la vitesse de rotation de la sortie (4) du dispositif (1) et à un paramètre relatif à la charge transmise par le dispositif de transmission (1).

3. Dispositif de transmission selon la revendication 2, caractérisé en ce que le deuxième moyen d'accouplement sélectif comprend un embrayage (23) qui relie progressivement deux (18, 19) des trois accès du mécanisme différentiel (13) lorsque ladite vitesse de rotation franchit dans le sens croissant un intervalle de vitesses de passage en prise directe.

4. Dispositif selon la revendication 1, caractérisé en ce que le premier moyen d'accouplement (7) réalise par son propre glissement une réduction de vitesse entre l'entrée (2) du dispositif et le deuxième accès du mécanisme différentiel.

5. Dispositif conforme à l'une des revendications 1 à 4, caractérisé en ce que l'organe mené (11, 111) du premier moyen d'accouplement sélectif (7) est relié au deuxième accès (19) du mécanisme différentiel (13) par l'intermédiaire d'un réducteur (27) à deux rapports.

6. Dispositif conforme à la revendication 5, caractérisé en ce que l'un des deux rapports du réducteur (27) est un rapport de prise directe.

7. Dispositif conforme à la revendication 6, caractérisé en ce que le réducteur (27) comprend un second mécanisme différentiel comprenant un organe de réaction (31) monté sur roue libre (32) pour empêcher la rotation de l'organe de réaction (31) dans le sens de la réaction qui lui est transmise lors de la réduction de vitesse entre l'organe mené (11, 111) du premier moyen d'accouplement (7, 107) et ledit deuxième accès (19).

8. Dispositif selon l'une des revendications 1 à 3, caractérisé en ce que le premier moyen d'accouplement (7) réalise par son propre glissement une réduction de vitesse entre l'entrée (2) du dispositif et son organe mené (11), en ce qu'un second mécanisme différentiel interposé entre l'organe mené (11) et le deuxième accès (19) du mécanisme différentiel comprend un organe de réaction (31) monté sur roue libre (32) pour empêcher la rotation de l'organe de réaction (31) dans le sens de la réaction qui lui est transmise lors de la réduction de vitesse entre l'organe mené (11, 111) du premier moyen d'accouplement (7, 107) et ledit deuxième accès (19), et en ce qu'il est prévu un troisième moyen d'accouplement sélectif (33) pour, dans une phase (P'₃) de fonctionnement correspondant à un troisième rapport de transmission intermédiaire entre le deuxième rapport et le rapport de prise directe, réaliser sélectivement une prise directe entre l'organe mené (11, 111) du moyen d'accouplement (7, 107) et ledit deuxième accès (19).

9. Dispositif conforme à la revendication 7 ou 8, caractérisé en ce qu'il comprend des moyens (42) pour relâcher la roue libre (32) associée à l'organe de réaction (31) lors du fonctionnement selon le premier rapport de transmission.

10. Dispositif conforme à l'une des revendications 1 à 9, caractérisé en ce que l'organe menant (8, 108) du premier moyen d'accouplement sélectif (7) est relié à l'entrée (2) du dispositif par l'intermédiaire d'un embrayage d'entrée (9).

11. Dispositif conforme à la revendication 10, caractérisé en ce que l'embrayage d'entrée (9) est un embrayage sensible à la vitesse de rotation de l'entrée (2) du dispositif (1) pour relier l'entrée (2) du dispositif à l'organe menant (8, 108) du premier moyen d'accouplement sélectif (7) lorsque la vitesse de rotation de l'entrée (2) du dispositif excède un certain seuil.

12. Dispositif de transmission selon la revendication 11, caractérisé en ce que le premier moyen d'accouplement sélectif (7, 107) relie progressivement l'entrée (2) du dispositif avec le deuxième accès (19) du mécanisme différentiel (13) lorsque la vitesse de rotation de l'entrée (2) du dispositif franchit dans le sens croissant un intervalle de vitesses prédéterminé situé plus haut en valeur que ledit certain seuil.

13. Dispositif de transmission conforme à l'une des revendications 1 à 12, caractérisé par l'interposition, entre le premier accès (18) et la sortie (4), d'un différentiel additionnel (51) ayant un organe de réaction (56) normalement empêché de tourner en sens rétrograde, et un moyen d'accouplement sélectif additionnel (77) sensible à la vitesse de rotation pour mettre automatiquement en prise directe l'entrée (52) et la sortie (54) du différentiel additionnel, ledit moyen d'accouplement additionnel étant d'un type susceptible de glissement angulaire relatif, transmettant un couple qui est fonction de la vitesse de rotation, de manière que le passage du différentiel additionnel (51) en prise directe se décale automatiquement vers les vitesses plus élevées lorsque le couple à transmettre est plus élevé.

14. Dispositif de transmission conforme à la revendication 13, caractérisé par des moyens de marche arrière (57) pour, sélectivement et sensiblement simultanément, désaccoupler et immobiliser la sortie (54) du différentiel additionnel, libérer l'organe de réaction (56) pour lui permettre de tourner en sens rétrograde, et accoupler l'organe de réaction (56) au moins indirectement avec la sortie (4) du dispositif.

15. Dispositif de transmission selon l'une des revendications 1 à 14, caractérisé en ce que l'un au moins des moyens d'accouplement sélectif est un embrayage (107) commandé en fonction de ladite vitesse de rotation du moyen d'accouplement pour passer progressivement d'un état débrayé à un état embrayé lorsque ladite vitesse de rotation du moyen d'accouplement franchit dans le sens croissant un intervalle de vitesses prédéterminé.

16. Dispositif selon la revendication 15, caractérisé en ce que l'embrayage (107) commandé en fonction de la vitesse comprend des moyens pour faire varier l'intervalle de vitesses comme une fonction croissante du couple transmis par le dispositif.

17. Dispositif de transmission conforme à la revendication 16, caractérisé en ce que les moyens pour faire varier l'intervalle de vitesses comprennent des moyens (92) pour appliquer à l'embrayage commandé en fonction de la vitesse (107) un effort de serrage qui est une fonction sensiblement continue de la vitesse, au moins sur une plage de variation prédéterminée.

18. Dispositif de transmission selon l'une des revendications 15 à 17, caractérisé en ce qu'au moins un embrayage commandé en fonction de la vitesse de rotation (107) est un embrayage du type multidisques comprenant une alternance de disques (79, 81) liés en rotation à l'organe menant (84) et à l'organe mené (82) de l'embrayage.

19. Dispositif de transmission selon la revendication 18, caractérisé en ce que des bagues de friction folles (88) sont interposées entre les disques successifs (79, 81).

20. Dispositif de transmission conforme à la revendication 19, caractérisé en ce que les disques (79, 81) sont en acier et les bagues folles (88) sont en bronze.

21. Dispositif de transmission conforme à la revendication 19 ou 20, caractérisé en ce que l'épaisseur des bagues folles (88) est de l'ordre de 0,5 mm.

22. Dispositif de transmission selon l'une des revendications 18 à 21, caractérisé en ce que ledit "au moins un" embrayage commandé en fonction de la vitesse de rotation (9, 107, 23, 77) comprend un ensemble de masselottes (92) montées en bascule sur une bordure périphérique (91) entraînée en rotation à la vitesse à laquelle l'embrayage est sensible, chaque masselotte étant guidée dans une fente (203) sensiblement axiale d'une cage (201) commune à toutes les masselottes (92) et étant solidaire d'une surface d'actionnement (96) appuyée au moins indirectement sur les disques de l'embrayage, les surfaces d'actionnement (96) des masselottes (92) ayant une composante de déplacement axial dans le sens de la compression axiale de l'embrayage lorsque les masselottes (92) pivotent en bascule sous l'action de la force centrifuge.

23. Dispositif de transmission conforme à la revendication 22, caractérisé en ce que les fentes (203) de la cage (201) sont ouvertes à une extrémité axiale de la cage (201).

24. Dispositif de transmission conforme à l'une des revendications 22 ou 23, caractérisé en ce que la cage (201) est solidaire d'une bague de poussée (98) des disques de l'embrayage, sur laquelle s'appuient les faces d'actionnement (96) des masselottes.

25. Dispositif de transmission conforme à l'une des revendications 22 à 24, caractérisé en ce que l'embrayage du type multidisques comprend une bague de ceinture (206) qui entoure l'ensemble des masselottes (92) et est couplée en déplacement axial avec les masselottes (92) pour synchroniser les mouvements des masselottes.

26. Dispositif de transmission conforme à la revendication 25, caractérisé en ce que la bague de ceinture (206) comprend une butée (208) limitant le basculement des masselottes (92) sous l'action de la force centrifuge.

27. Dispositif de transmission conforme à l'une des revendications 22 à 26, caractérisé en ce que chaque masselotte (92) comprend une plaquette massive ayant sur son pourtour une encoche (93) pour recevoir la bordure périphérique.

28. Dispositif conforme à l'une des revendications 1 à 27, caractérisé en ce que les moyens empêchant la rotation en sens rétrograde sont désactivables (39) pour le fonctionnement avec la sortie (4) immobile.

29. Dispositif conforme à l'une des revendications 1 à 11, dans lequel le moyen d'accouplement sélectif est un convertisseur de couple hydraulique (7) dont l'organe menant est une pompe (8) de convertisseur et l'organe mené est une turbine (11) de convertisseur.

**Claims**

1. A transmission device having a variable ratio, more particularly for motor cars, comprising, between an input (2) and an output (4) of the device, a differential mechanism (13) having three ports (18, 19, 21) among which, at least during certain stages of operation:
   - a first port (18) of the differential mechanism is connected to the output (4) of the device;
   - a second port (19) of the differential mechanism is connected to a driven member (11, 111) of a first selective coupling means (7, 107) intended for shifting from a first transmission ratio to a second transmission ratio in which the speed of rotation of the output (4) is higher, with respect to that of the input, than during operation under the first ratio, a driving member (8, 108) of the selective coupling means being connected to the input of the device;
   - a third port (23) of the differential mechanism (13) being connected to the input (2) of the device (1) independently from the first coupling means (7, 107),
   
   means (22) being provided for preventing rotation of the second port (19) in reverse when the first selective coupling means (7, 107) disconnects the second port (19) from the input (2) for operation under the first transmission ratio, the first selective coupling means (7, 107) being of a type activated as a function of a speed of rotation of said coupling means and allowing a relative angular slip with transmission of a torque which is a function of said speed of rotation, whereby shifting to the second ratio is automatically displaced towards higher speeds when the torque to be transmitted is higher, characterised in that the first selective coupling means (7), when in the coupled state, activates, for the second transmission ratio, a speed reducing connection between the input (2) of the device and the second port (19) of the differential mechanism, and in that there is provided a second selective coupling means (23) which is responsive to a speed of rotation for realising a further transmission ratio corresponding to direct drive condition between the first and the third port of the differential mechanism.

2. A device according to claim 1, characterised in that the second selective coupling means (23, 24) is an automatic means responsive to the speed of rotation of the output (4) of the device (1) and to a parameter relating to the load transmitted by the transmission device (1).

3. A transmission device according to claim 2, characterised in that the second selective coupling means comprises a clutch (23) which progressively connects two (18, 19) of the three ports of the differential mechanism (13) when said speed of rotation increases across a range of speeds of shifting into direct drive.

4. A device according to claim 1, characterised in that the first coupling means (7) performs by its own slip a speed reduction between the input (2) of the device and the second port of the differential mechanism.

5. A device according to anyone of claims 1-4, characterised in that the driven member (11, 111) of the first selective coupling means (7) is connected to the second port (19) of the differential mechanism (13) via a two-speeds reducer (27).

6. A device according to claim 5, characterised in that one of the two ratios of the reducer (27) is a direct drive ratio.

7. A device according to claim 6, characterised in that the reducer (27) comprises a second differential mechanism comprising a reaction member (31) mounted on a free wheel (32) for preventing rotation of the reaction member (31) in the direction of the reaction which is transmitted thereto when there is a speed reduction between the driven member (11, 111) of the first coupling means (7, 107) and said second port (19).

8. A device according to anyone of claims 1-3, characterised in that the first coupling means (7) performs by its own slip a speed reduction between the input (2) of the device and its driven member (11), in that a second differential mechanism mounted between the driven member (11) and the second port (19) of the differential mechanism comprises a reaction member (31) mounted on a free wheel (32) for preventing rotation of the reaction member (31) in the direction of the reaction which is transmitted thereto when there is a speed reduction between the driven member (11, 111) of the first coupling means (7, 107) and said second port (19), and in that there is provided a third selective coupling means (33) for selectively realising, in an operating stage (P'$_3$) corresponding to a third transmission ratio intermediate between the second ratio and the direct drive ratio, a direct drive between the driven member (11, 111) of the coupling means (7, 107) and said second port (19).

9. A device according to claim 7 or 8, characterised by comprising means (42) for releasing the free-wheel (32) associated with the reaction member (31) during operation under the first transmission ratio.

10. A device according to anyone of claims 1-9, characterised in that the driving member (8, 108) of the first selective coupling means (7) is connected to the input (2) of the device via an input clutch (9).

11. A device according to claim 10, characterised in that the input clutch (9) is responsive to the speed of rotation of the input (2) of the device (1) for connecting the input (2) of the device to the driving member (8, 108) of the first selective coupling means (7) when the speed of rotation of the input (2) of the device exceeds a certain threshold.

12. A transmission device according to claim 11, characterised in that the first selective coupling means (7, 107) progressively connects the input (2) of the device with the second port (19) of the differential mechanism (13) when the speed of rotation of the input (2) of the device increases across a predetermined range of speeds located above said certain threshold.

13. A transmission device according to anyone of claims 1-12, characterised by an additional differential (51) being mounted between the first port (18) and the output (4) and having a reaction member (56) normally prevented from reverse rotation and an additional selective coupling means (77) which is responsive to rotating speed for automatically setting in direct drive the input (52) and the output (54) of the additional differential, said additional coupling means being of a type capable of relative angular slip, transmitting a torque which is a function of the speed of rotation, whereby shifting of the additional differential (51) into direct drive (6) is automatically displaced towards higher speeds when the torque to be transmitted his higher.

14. A transmission device according to claim 13, characterised by a reverse gear means (57) for, selectively and substantially simultaneously, uncoupling and blocking the output (54) of the additional differential, releasing the reaction member (56) for allowing reverse rotation thereof, and coupling the reaction member (56) at least indirectly with the output (4) of the device.

15. A transmission device according to anyone of claims 1-14, characterised in that at least one of said selective coupling means is a clutch (107) controlled as a function of said speed of rotation of the coupling means for progressive transition from an uncoupled state towards a coupled state when said speed of rotation of the coupling means increases across a predetermined range of speeds.

16. A device according to claim 15, characterised in that the clutch (107) controlled as a function of speed comprises means for varying the range of speeds as an increasing function of the torque transmitted by the device.

17. A transmission device according to claim 16, characterised in that the means for varying the range of speeds comprises means (92) for subjecting the clutch controlled as a function of speed (107) to a clamping thrust being a substantially continuous function of speed, at least over a predetermined range of variation.

18. A transmission device according to anyone of claims 15-17, characterised in that at least one clutch controlled as a function of speed of rotation (107) is a clutch of the multidisks type comprising an alternate arrangement of disks (79, 81) connected for common rotation with the driving member (84) and with the driven member (82) of the clutch.

19. A transmission device according to claim 18, characterised by idling friction rings (88) interposed between the successive disks (79, 81).

20. A transmission device according to claim 19, characterised in that the disks (79, 81) are made of steel and the idling rings (88) are made of bronze.

21. A transmission device according to claim 19 or 20, characterised by the thickness of the idling rings (88) being of the order of 0,5 millimetre.

22. A transmission device according to anyone of claims 18-21, characterised in that said at least one clutch controlled as a function of rotating speed (9, 107, 23, 77) comprises a plurality of weights (92) rockingly mounted on a peripheral edge (91) driven in rotation at the speed to which the clutch is responsive, each weight being guided in a substantially axial slit (203) of a cage (201) which is common to all the weights (92) and being fast with an actuating surface (96) which at least indirectly engages the disks of the clutch, the actuating surfaces (96) of the weights (92) having an axial component of displacement in the direction of axial compression of the clutch when the weights (92) rockingly pivot under the action of the centrifugal force.

23. A transmission device according to claim 22, characterised in that the slits (203) of the cage (201) are open at an axial end of the cage (201).

24. A transmission device according to claim 22 or 23, characterised in that the cage (201) is fast with a thrust ring (98) adapted for applying a thrust to the clutch disks and which is engaged by the actuating surfaces (96) of the weight.

25. A transmission device according to anyone of claims 22-24, characterised in that the clutch, being of the multidisks type, comprises a surrounding ring (206) which surrounds all the weights (92) and is coupled for axial displacement with the weights (92) for synchronising the movements of the weights.

26. A transmission device according to claim 25, characterised in that the surrounding ring (206) comprises an abutment (208) limiting rocking of the weights (92) under the action of the centrifugal force.

27. A transmission device according to anyone of claims 22-26, characterised in that each weight (92) comprises a solid plate having on the periphery thereof a notch (93) for receiving the peripheral edge.

28. A device according to anyone of claims 1-27, characterised in that said means preventing a reverse rotation may be disabled (39) for operation with the output (4) being stationary.

29. A device according to anyone of claims 1-11, in which the selective coupling means is an hydraulic torque converter (7) with the driving member thereof being a converter impeller (8) and the driven member thereof being a converter turbine (11).

**Patentansprüche**

1. Wechselgetriebe, insbesondere für Kraftfahrzeuge, mit einem zwischen einem Getriebe-Eingang (2) und einem Getriebe-Ausgang (4) angeordnetem Differentialgetriebe (13) mit drei Anschlüssen (Wellen 18, 19, 21), von denen zumindest während bestimmter Betriebsphasen:
    - eine erste Welle (18) des Differentialgetriebes mit dem Getriebe-Ausgang (4) verbunden ist;
    - eine zweite Welle (19) des Differentialgetriebes mit einem angetriebenen Getriebeteil (11, 111) eines ersten selektiven Kupplungsmittels (7, 107) verbunden ist, das für den Übergang von einem ersten Getriebegang zu einem zweiten Getriebegang bestimmt ist, in dem die Rotationsgeschwindigkeit des Getriebe-Ausgangs (4) in bezug auf die des Eingangs größer ist als im ersten Getriebegang, wobei ein antreibendes Getriebeteil (8, 108) des selektiven Kupplungsmittels mit dem Getriebe-Eingang verbunden ist; und

- eine dritte Welle (21) des Differentialgetriebes (13) mit dem Eingang (2) des Getriebes (1) unabhängig von der ersten Kupplung (7, 107) verbunden ist,

und mit Feststellmitteln (22) zum Unterbinden einer rückwärtigen Drehung der zweiten Welle (19), wenn bei einer Betriebweise im ersten Getriebegang das erste selektive Kupplungsmittel (7, 107) die zweite Welle (19) relativ zum Getriebe-Eingang (2) freigibt, wobei die erste selektive Kupplung (7, 107) von dem Typ ist, der in Abhängigkeit von der Winkelgeschwindigkeit arbeitet und einen Schlupf mit Übertragung eines Drehmoments zuläßt, das von dieser Winkelgeschwindigkeit abhängig ist, dergestalt, daß sich der Übergang zum zweiten Getriebegang automatisch zu höheren Geschwindigkeiten hin verschiebt, wenn das zu übertragende Drehmoment erhöht wird,

dadurch gekennzeichnet, daß im eingekuppelten Zustand das erste selektive Kupplungsmittel (7) für den zweiten Getriebegang eine die Geschwindigkeit reduzierende Verbindung zwischen dem Getriebe-Eingang (2) und der zweiten Welle (19) des Differentialgetriebes herstellt, und daß ein zweites selektives Kupplungsmittel (23) vorgesehen ist, das auf eine Winkelgeschwindigkeit reagiert, um eine weitere Übersetzung zu realisieren, die einem direkten Gang zwischen der ersten und der dritten Welle des Differentialgetriebes entspricht.

2. Getriebe nach Anspruch 1, dadurch gekennzeichnet, daß das zweite selektive Kupplungsmittel (23, 24) ein automatisch in Abhängigkeit von der Rotationsgeschwindigkeit des Ausgangs (4) des Getriebes (1) schaltendes Element ist, das zusätzlich von einem Parameter abhängig arbeitet, der der durch das Getriebe (1) übertragenen Last entspricht.

3. Getriebe nach Anspruch 2, dadurch gekennzeichnet, daß das zweite selektive Kupplungsmittel eine ausrückbare Kupplung (23) aufweist, die progressiv zwei (18, 19) der drei Wellen des Differentialgetriebes (13) verbindet, jedesmal wenn die genannte Winkelgeschwindigkeit ein zum Übergang in den direkten Gang vorbestimmtes Intervall von Geschwindigkeiten in ansteigender Richtung durchläuft.

4. Getriebe nach Anspruch 1, dadurch gekennzeichnet, daß die erste Kupplung (7) durch ihren eigenen Schlupf eine Reduktion der Geschwindigkeit zwischen dem Eingang (2) des Getriebes und der zweiten Welle des Differentialgetriebes erzeugt.

5. Getriebe nach einem der Ansprüche 1 bis 4, dadurch gekennzeichnet, daß das angetriebene Getriebeteil (11, 111) der ersten selektiven Kupplung (7) mit der zweiten Welle (19) des Differentialgetriebes (13) über ein Untersetzungsgetriebe (27) mit zwei Gängen verbunden ist.

6. Getriebe nach Anspruch 5, dadurch gekennzeichnet, daß einer der beiden Gänge des Untersetzungsgetriebes (27) ein direkter Gang ist.

7. Getriebe nach Anspruch 6, dadurch gekennzeichnet, daß das Untersetzungsgetriebe (27) ein zweites Differentialgetriebe aufweist, letzteres mit einem Reaktionsorgan (Hohlrad 31), das auf einem Freilauf (32) gelagert ist, um eine Drehung im Drehsinn der Reaktion, die ihm während der Reduktion der Geschwindigkeit zwischen dem angetriebenen Getriebeteil (11, 111) der ersten Kupplung (7, 107) und der zweiten Welle (19) aufgezwungen wird, zu verhindern.

8. Getriebe nach einem der Ansprüche 1 bis 3, dadurch gekennzeichnet, daß die erste Kupplung (7) durch ihren eigenen Schlupf eine Reduktion der Geschwindigkeit zwischen dem Eingang (2) des Getriebes und ihrem angetriebenen Getriebeteil (11) ermöglicht, daß ein zweites Differentialgetriebe zwischen dem angetriebenen Getriebeteil (11) und der zweiten Welle (19) des (ersten) Differentialgetriebes ein Reaktionselement (Hohlrad 31) aufweist, das auf einem Freilauf (32) angeordnet ist, um eine Drehung des Hohlrades (31) im Drehsinn der Reaktion zu verhindern, die diesem während der Geschwindigkeitsreduktion zwischen dem angetriebenen Teil (11, 111) der ersten Kupplung (7, 107) und der zweiten Welle (19) aufgezwungen wird, und daß eine dritte selektive Kupplung (33) dazu vorgesehen ist, während einer Funktionsphase (P′₃) entsprechend einem dritten Übersetzungsverhältnis, zwischen dem zweiten Gang und dem direkten Gang, selektiv einen direkten Gang zwischen dem angetriebenen Getriebeteil (11, 111) der Kupplung (7, 107) und der besagten zweiten Welle (19) zu realisieren.

9. Getriebe nach einem der Ansprüche 7 oder 8, dadurch gekennzeichnet, daß es Mittel (42) aufweist, um den mit dem Reaktionsorgan (Hohlrad 31) verbundenen Freilauf (32) während der Funktionsweise im ersten Getriebegang freizugeben.

10. Getriebe nach einem der Ansprüche 1 bis 9, dadurch gekennzeichnet, daß das antreibende Getriebeteil (8, 108) der ersten selektiven Kupplung (7) mit dem Eingang (2) des Getriebes mittels einer ausrückbaren Eingangskupplung (9) verbunden ist.

11. Getriebe nach Anspruch 10, dadurch gekennzeichnet, daß die ausrückbare Eingangskupplung (9) eine Kupplung ist, die in Abhängigkeit von der Drehgeschwindigkeit des Eingangs (2) des Getriebes (1) arbeitet, um den Eingang (2) des Getriebes mit dem antreibenden Getriebeteil (8, 108) der ersten selektiven Kupplung (7) jedesmal dann zu verbinden, wenn die Rotationsgeschwindigkeit des Eingangs (2) des Getriebes einen bestimmten Wert überschreitet.

12. Getriebe nach Anspruch 11, dadurch gekennzeichnet, daß die erste selektive Kupplung (7, 107) den Getriebe-Eingang (2) jedesmal dann progressiv mit der zweiten Welle (19) des Differentials (13) verbindet, wenn die Rotationsgeschwindigkeit des Getriebe-Eingangs (2) ein Geschwindigkeits-Intervall in ansteigender Richtung durchläuft, das oberhalb des bestimmten Werts angeordnet ist.

13. Getriebe nach einem der Ansprüche 1 bis 12, gekennzeichnet durch die Anordnung eines zusätzlichen Differentialgetriebes (51) zwischen der ersten Welle (18) und dem Ausgang (4), das ein Reaktionselement (Sonnenrad 56) aufweist, das normalerweise an einer rückwärtigen Drehung gehindert ist, und mit einer zusätzlichen selektiven Kupplung (77), die abhängig von der Drehgeschwindigkeit ist, um den Eingang (52) und den Ausgang (54) des zusätzlichen Differentialgetriebes automatisch miteinander zu verbinden, wobei die zusätzliche Kupplung von dem Typ ist, der zu einer relativen Winkelverschiebung fähig ist, und dabei ein Drehmoment überträgt, das eine Funktion der Drehgeschwindigkeit ist, in der Weise, daß der Übergang des zusätzlichen Differentialgetriebes (51) in den direkten Gang sich automatisch zu höheren Geschwindigkeiten hin verschiebt, wenn das zu übertragende Drehmoment erhöht ist.

14. Getriebe nach Anspruch 13, gekennzeichnet durch Rückwärtsgangmittel (57) um wahlweise und im wesentlichen gleichzeitig den Ausgang (54) des zusätzlichen Differentialgetriebes abzukuppeln und stillzulegen, das Reaktionsorgan (Sonnenrad 56) freizugeben und es ihm zu erlauben, sich rückwärts zu drehen, und das Reaktionsorgan (Sonnenrad 56) wenigstens indirekt mit dem Ausgang (4) des Getriebes zu verkuppeln.

15. Getriebe nach einem der Ansprüche 1 bis 14, dadurch gekennzeichnet, daß wenigstens eine der selektiven Kupplungen (107) eine ausrückbare Kupplung ist, die in Abhängigkeit von besagter Rotationsgeschwindigkeit der Kupplung gesteuert wird, um nach und nach aus einem ausgekuppelten in einen eingekuppelten Zustand jedesmal dann überzugehen, wenn die Rotationsgeschwindigkeit der Kupplung ein Intervall von voreingestellten Geschwindigkeiten in ansteigender Richtung durchläuft.

16. Getriebe nach Anspruch 15, dadurch gekennzeichnet, daß die ausrückbare Kupplung (107), die von er Geschwindigkeit gesteuert wird, Mittel zum Einstellen des Geschwindigkeits-Intervalls als eine Funktion des durch das Getriebe übertragenen Drehmoments aufweist.

17. Getriebe nach Anspruch 16, dadurch gekennzeichnet, daß die Mittel zum Einstellen des Geschwindigkeits-Intervalls Mittel (92) umfassen, um auf die Kupplung eine Klemmbeanspruchung aufzubringen, die eine Funktion der Geschwindigkeit ist, zumindest in einem vorbestimmten Variationsbereich.

18. Getriebe nach einem der Ansprüche 15 bis 17, dadurch gekennzeichnet, daß wenigstens eine in Abhängigkeit von der Rotationsgeschwindigkeit gesteuerte, ausrückbare Kupplung eine Kupplung des Mehrscheibentyps ist, der abwechselnd Scheiben (79, 81) aufweist, die entweder mit dem antreibenden Teil (84) oder mit dem angetriebenen Teil (82) der Kupplung verbunden sind.

19. Getriebe nach Anspruch 18, dadurch gekennzeichnet, daß frei rotierende Reibringe (88) zwischen benachbarten Scheiben (79, 81) angeordnet sind.

20. Getriebe nach Anspruch 19, dadurch gekennzeichnet, daß die Scheiben (79, 81) aus Stahl und die Reibringe (88) aus Bronze bestehen.

21. Getriebe nach Anspruch 19 oder 20, dadurch gekennzeichnet, daß die Dicke der Reibringe (88) in der Größenordnung von 0,5 mm liegt.

22. Getriebe nach einem der Ansprüche 18 bis 21, dadurch gekennzeichnet, daß die genannte "wenigstens eine" in Abhängigkeit von der Rotationsgeschwindigkeit gesteuerte Kupplung (9, 107, 23, 77) eine Anordnung von Fliehgewichten (92) aufweist, die schwenkbar auf einem Umfangsrand (91) angeordnet sind, der mit der Geschwindigkeit, zu der die Funktion der betreffenden Kupplung abhängig ist, in Rotation versetzt wird, wobei jedes Fliehgewicht in einem im wesentlichen axialen Schlitz (203) eines für alle Fliehgewichte (92) gemeinsamen Käfigs (201) geführt wird und einstückig mit einer Betätigungsfläche (96) ausgebildet ist, die wenigstens indirekt gegen die Scheiben der Kupplung drückt und wobei die Betätigungsflächen (96) der Fliehgewichte (92) eine axiale Bewegungskomponente im Sinne des axialen Drucks auf die Kupplung aufweisen, wenn die Fliehgewichte (92) unter der Wirkung der Zentrifugalkraft ausschwenken.

23. Getriebe nach Anspruch 22, dadurch gekennzeichnet, daß die Schlitze (203) des Käfigs (201) zu einem axialen Ende des Käfigs (201) hin offen sind.

24. Getriebe nach einem der Ansprüche 22 oder 23, dadurch gekennzeichnet, daß der Käfig (201) einstückig mit einem Andruckring (98) für die Scheiben der Kupplung ausgebildet ist, gegen den die Betätigungsflächen (96) der Fliehgewichte drücken.

25. Getriebe nach einem der Ansprüche 22 bis 24, dadurch gekennzeichnet, daß die Mehrscheibenkupplung einen Umfangsring (206) aufweist, der die Gesamtheit der Fliehgewichte (92) umschließt und bezüglich einer axialen Verschiebung mit den Fliehgewichten (92) zur Synchronisation der Bewegung der Fliehgewichte gekoppelt ist.

26. Getriebe nach Anspruch 25, dadurch gekennzeichnet, daß der Umfangsring (206) einen Anschlag (208) aufweist, der die Schwenkbewegung der Fliehgewichte (92) unter der Wirkung der Zentrifugalkraft begrenzt.

27. Getriebe nach einem der Ansprüche 22 bis 26, dadurch gekennzeichnet, daß jedes Fliehgewicht (92) eine massive Scheibe aufweist, die an ihrem Umfang eine Ausnehmung (93) zur Aufnahme des Umfangrandes aufweist.

28. Getriebe nach einem der Ansprüche 1 bis 27, dadurch gekennzeichnet, daß für eine Betriebweise mit stillstehendem Ausgang (4) die die rückwärtige Drehung verhindernden Mittel desaktivierbar (39) sind.

29. Getriebe nach einem der Ansprüche 1 bis 11, bei dem die selektive Kupplung ein hydraulischer Drehmomentwandler (7) ist, dessen antreibendes Getriebeteil eine Pumpe (8) des wandlers und dessen angetriebenes Getriebeteil eine Turbine (11) des Wandlers ist.

## FIG.1

## FIG.2

FIG_3

EP 0 469 145 B1

FIG_4

FIG_5

FIG.6

FIG.7

FIG.8

FIG_9

FIG_10